# EUROPEAN PATENT APPLICATION

(11) **EP 4 644 336 A1**
(43) Date of publication of application: **05.11.2025**
(21) Application number: 25743687.3
(22) Date of filing: 07.02.2025
(51) Int. Cl.: C02F 1/461, C02F 1/46, C25B 9/23, C25B 11/051, C25B 9/75, C02F 103/08

(54) **DIRECT SEAWATER ELECTROLYSIS DEVICE, DIRECT SEAWATER ELECTROLYSIS MULTI-CELL, AND MAGNESIUM HYDROXIDE RECOVERY SYSTEM COMPRISING SAME**

(30) Priority: 07.02.2024 KR 20240019230; 23.09.2024 KR 20240128243; 21.01.2025 KR 20250008592
(71) Applicant: Korea Institute of Energy Research, Daejeon 34129 (KR)
(72) Inventor: HAN, Jihyung, Jeju-si, Jeju-do 63303 (KR); JEONG, Namjo, Jeju-si, Jeju-do 63101 (KR); JWA, Eunjin, Jeju-si, Jeju-do 63336 (KR); JEUNG, Yuncheol, Jeju-si, Jeju-do 63357 (KR); HWANG, Kyusik, Jeju-si, Jeju-do 63326 (KR); KIM, Hanki, Jeju-si, Jeju-do 63226 (KR); KIM, Suni, Seogwipo-si, Jeju-do 63558 (KR)
(74) Representative: Gottschald Patentanwälte Partnerschaft mbB
(86) International application number: PCT/KR2025/001831
(87) International publication number: WO 2025/170362

(57) **Abstract**

Provided is a direct seawater electrolysis device including a cathode electrocatalytic layer immersed in seawater, an anode electrocatalytic layer immersed in anolyte, a bipolar membrane interposed between the cathode electrocatalytic layer and the anode electrocatalytic layer, a cathode current collector disposed on the cathode electrocatalytic layer and including a cathode current collector body and a cathode current collector coupler, a subplate on the cathode electrocatalytic layer, and a cathode spacer interposed between the cathode electrocatalytic layer and the subplate. The cathode current collector includes a cathode current collector body separated from the cathode electrocatalytic layer, and a cathode current collector coupler in contact with a portion of the cathode electrocatalytic layer and interposed between the cathode current collector body and the portion of the cathode electrocatalytic layer. The subplate and the cathode spacer include one or more through-holes at positions corresponding to the cathode current collector coupler. At least one of the subplate and the cathode spacer includes a non-conductive material.

The direct seawater electrolysis device including a plurality of cathodes includes a cathode immersed in the seawater, an anode immersed in the anolyte, and a bipolar membrane disposed between the cathode and the anode to acidify the seawater. The cathode includes a first cathode and a second cathode separately disposed to be electrically isolated from the first cathode.

## Description

### [Technical Field]

The present disclosure relates to a direct seawater electrolysis device, and more specifically, relates to a direct seawater electrolysis device, a direct seawater electrolysis multi-cell, and a magnesium hydroxide recovery system including the same.

### [Background Art]

Direct seawater electrolysis (DSE) which can store and extract electric energy to utilize the electric energy for carbon reduction is an electrochemical technology for producing hydrogen by directly using seawater as an electrolyte. Since most of the water on Earth is stored in the ocean, the DSE has an advantage in that infinite water resources may be used, and can minimize capital expenditures, operating costs, and carbon footprints in raw material manufacturing, purification, and desalination processes.

Meanwhile, a water reduction reaction may occur at a cathode of the direct seawater electrolysis device, in which water is reduced to generate hydrogen gas, as illustrated in Reaction Scheme 1 below.

[Reaction Scheme 1] 4H2O + 4e- → 2H2(g) + 4OH-

In this case, the hydroxide ions generated in Reaction Scheme 1 may react with various metal cations present in the seawater, thereby causing a problem of forming inorganic precipitates.

Specifically, when the seawater is used as the electrolyte in a general water electrolysis device that uses fresh water as the electrolyte, there may be a problem as follows. A water reduction reaction may proceed as a side reaction in a cathode spacer, a bipolar plate, and a cathode current collector which are made of conductive metal, and thus, thick inorganic precipitates may be formed. Consequently, due to this problem, the inorganic precipitates may block a flow of the seawater, thereby increasing interfacial resistance at the cathode and internal resistance of a stack.

In order to prevent these problems, a separate acid solution, such as hydrochloric acid, sulfuric acid, or nitric acid, may be periodically introduced directly into the seawater electrolysis device to dissolve the formed inorganic precipitates. However, since the seawater electrolysis device cannot be operated during the acid solution treatment process, there may be a problem in that hydrogen cannot be continuously generated.

In order to enable continuous operation of the direct seawater electrolysis device, a bipolar membrane capable of releasing protons is used as a diaphragm, instead of a dissolution process of using a separate acid solution. In this manner, the protons released from the bipolar membrane acidify the seawater, thereby preventing the growth of the inorganic precipitates.

However, at a low current density (approximately 20 mA/cm² or lower), the inorganic precipitates formed at the cathode interface may be relatively quickly dissolved. In contrast, at a high current density (approximately 100 mA/cm² or higher), a formation rate of the inorganic precipitates exceeds the dissolution rate. Therefore, the inorganic precipitates may continue to grow, and thus, a thick film of the inorganic precipitates (with a thickness of approximately 1 mm or more) may be formed. As a result, the interfacial resistance of the cathode may increase, and voltage efficiency may decrease.

### [Disclosure of Invention]

### [Technical Problem]

An object of the present disclosure is to provide a direct seawater electrolysis device capable of effectively preventing the formation of inorganic precipitates on components other than the electrodes.

Another object of the present disclosure is to provide a direct seawater electrolysis device capable of preventing an increase in cell resistance.

Still another object of the present disclosure is to provide a direct seawater electrolysis device in which the cell voltage is stably maintained even during long-term operation.

Still another object of the present disclosure is to provide a multi-cell system comprising a direct seawater electrolysis device.

Still another object of the present disclosure is to provide a magnesium hydroxide recovery system having high purity and a wide range of applications.

Still another object of the present disclosure is to provide a direct seawater electrolysis device capable of maintaining the electrochemical activity of cathodes by employing a multi-cathode system, wherein the thickness of inorganic precipitates formed on the cathodes can be controlled to a predetermined thickness or less, even under conditions where high current density is applied.

The objects of the present disclosure are not limited to the above-described objects, and other objects and advantages of the present disclosure which are not described herein may be understood by the following description, and may be more clearly understood by embodiments of the present disclosure. In addition, it may be easily understood that the objects and the advantages of the present disclosure may be realized by means and combinations thereof which are described in the specification.

### [Solution to Problem]

According to a first embodiment of the present disclosure, in order to achieve the above-described object, there is provided a direct seawater electrolysis device including a cathode electrocatalytic layer immersed in seawater (as catholyte), an anode electrocatalytic layer immersed in anolyte, a bipolar membrane interposed between the cathode electrocatalytic layer and the anode electrocatalytic layer, a cathode current collector disposed on the cathode electrocatalytic layer and including a cathode current collector body and a cathode current collector coupler, a subplate disposed on the cathode electrocatalytic layer, and a cathode spacer interposed between the cathode electrocatalytic layer and the subplate. The cathode current collector includes a cathode current collector body separated from the cathode electrocatalytic layer, and a cathode current collector coupler in contact with a portion of the cathode electrocatalytic layer and interposed between the cathode current collector body and the portion of the cathode electrocatalytic layer, the subplate and the cathode spacer include one or more through-holes at positions corresponding to the cathode current collector coupler, and at least one of the subplate and the cathode spacer includes a non-conductive material. Here, the other portion of the cathode electrocatalytic layer may be in contact with the cathode spacer.

In addition, the non-conductive material may include at least one of a plastic resin, a silicone resin, a diene rubber, and a glass fiber.

In addition, the subplate and the cathode spacer may include the non-conductive material.

In addition, at least one of the cathode current collector couplers may protrude in a stacking direction of the direct seawater electrolysis device, based on a first surface of the cathode current collector body, wherein the first surface may be a surface in contact with both the subplate and the cathode current collector body.

In addition, there may be provided the direct seawater electrolysis device further including a cathode gasket interposed between the subplate and the bipolar membrane, in which the cathode gasket includes the non-conductive material.

In addition, there may be provided the direct seawater electrolysis device further including an anode current collector disposed on the anode electrocatalytic layer, an anode spacer interposed between the bipolar membrane and the anode current collector, and an anode gasket interposed between the bipolar membrane and the anode current collector.

According to another aspect of the first embodiment of the present disclosure, there may be provided a direct seawater electrolysis multi-cell including the direct seawater electrolysis device, and one or more bipolar plates disposed on the direct seawater electrolysis device. Each of the bipolar plates includes a bipolar plate body separated from the cathode electrocatalytic layer, and a bipolar plate coupler in contact with a portion of the cathode electrocatalytic layer. The bipolar plate coupler may be interposed between the bipolar plate body and a portion of the cathode electrocatalytic layer. Here, the other portion of the cathode electrocatalytic layer may be in contact with the cathode spacer.

According to another aspect of the first embodiment of the present disclosure, there may be provided a magnesium hydroxide recovery system comprising the direct seawater electrolysis multi-cell, and an air bubble supply unit coupled to the direct seawater electrolysis multi-cell.

According to a second embodiment of the present disclosure, the direct seawater electrolysis device may include a cathode electrocatalytic layer immersed in seawater (as catholyte), an anode electrocatalytic layer immersed in anolyte, a bipolar membrane interposed between the cathode electrocatalytic layer and the anode electrocatalytic layer, a cathode current collector disposed on the cathode electrocatalytic layer and including a cathode current collector body and a cathode current collector coupler, and a subplate disposed on the cathode electrocatalytic layer. The cathode current collector may include a cathode current collector body spaced apart from the cathode electrocatalytic layer, and a cathode current collector coupler in contact with a portion of the cathode electrocatalytic layer and interposed between the cathode current collector body and the portion of the cathode electrocatalytic layer. The subplate may be formed of the non-conductive material, and may include one or more through-holes at positions corresponding to the cathode current collector coupler, and may include a cathode spacer pole protruding from one side surface of the subplate to form a flow path of the seawater.

In addition, the plurality of cathode spacer poles may form the flow path for the seawater by spacing apart the cathode electrocatalytic layer and the subplate.

In addition, the plurality of cathode spacer poles are arranged at regular intervals to uniformly maintain a space between the subplate and the cathode electrocatalytic layer.

In addition, the plurality of cathode spacer poles may induce a vortex in the seawater to remove inorganic precipitates formed on the cathode electrocatalytic layer or the cathode current collector coupler.

In addition, the plurality of cathode spacer poles may be alternately disposed on a plate surface of the subplate.

In addition, the plurality of cathode spacer poles may be disposed on the subplate in a movable state.

In addition, the plurality of cathode spacer poles may be individually disposed or grouped on a slidable support body provided inside the subplate.

In addition, a pair of control pins may be provided in a direction perpendicular to a surface of the subplate, and a position of the cathode spacer pole may be moved by moving the pair of control pins move in an upward/downward to horizontally move the slidable support body.

In addition, an end portion of the pair of control pins may have an inclined shape in opposite directions, and a cross section of the slidable support body may have a rhombus shape.

In addition, an inclined surface of the end portion of the control pin may engage with the rhombus-shaped inclined surface of the slidable support body to move the support body in both directions.

In addition, there may be further provided a cathode gasket for fixing the cathode electrocatalytic layer, an anode current collector located on a side surface of the anode electrocatalytic layer, an anode spacer located between the anode electrocatalytic layer and the anode current collector, and an anode gasket for fixing the anode electrocatalytic layer and the anode spacer. The anode spacer may be formed in a mesh shape including titanium.

In addition, the cathode electrocatalytic layer may be in direct contact with the cathode current collector coupler, and the remaining portion of thereof may be in contact with the cathode spacer poles.

According to another aspect of the second embodiment of the present disclosure, there may be provided a direct seawater electrolysis multi-cell including a direct seawater electrolysis device and one or more bipolar plates on the direct seawater electrolysis device. Each of the bipolar plates may include a bipolar plate body spaced apart from the cathode electrocatalytic layer, and a bipolar plate coupler in contact with a portion of the cathode electrocatalytic layer. The bipolar plate coupler may be interposed between the bipolar plate body and the portion of the cathode electrocatalytic layer. Here, a remaining portion of the cathode electrocatalytic layer may be in contact with the cathode spacer pole.

According to a third embodiment of the present disclosure, a direct seawater electrolysis device including a plurality of cathodes may include a cathode immersed in seawater, an anode immersed in an anolyte, and a bipolar membrane disposed between the cathode and the anode to acidify the seawater. The cathode may include a first cathode and a second cathode, which is separately disposed and electrically isolated from the first cathode.

In addition, the first cathode and the second cathode are alternately operated, and while the first cathode is operated to generate hydrogen from the acidified seawater, the second cathode may be taken offline to allow dissolution of inorganic precipitates formed thereon.

In addition, the cathode may further include a cathode current collector, a cathode electrocatalytic layer electrically coupled with the cathode current collector, a subplate formed of a non-conductive material to prevent the formation of inorganic precipitates on the cathode current collector and disposed between the cathode current collector and the cathode electrocatalytic layer, and a cathode spacer formed of the non-conductive material to prevent the formation of inorganic precipitates from being generated in the cathode and disposed between the cathode electrocatalytic layer and the subplate.

In addition, the cathode current collector may include a first cathode current collector, a second cathode current collector disposed separately from the first cathode current collector, and a cathode current collector gasket disposed between the first and the second cathode current collectors to electrically isolate them from each other.

In addition, the cathode current collector may include a cathode current collector body in contact with the subplate, and a cathode current collector coupler protruding from the cathode current collector body to penetrate the subplate and to be electrically coupled with the cathode electrocatalytic layer.

In addition, the subplate may include a plate hole through which the cathode current collector coupler penetrates. The cathode spacer may include a cathode spacer hole through which the cathode current collector coupler penetrates. The cathode spacer may include a first cathode spacer in contact with the first cathode current collector, and a second cathode spacer separated from the first cathode spacer and in contact with the second cathode current collector.

In addition, the cathode electrocatalytic layer may include a first cathode electrocatalytic layer in contact with the first cathode spacer, and a second cathode electrocatalytic layer separated from the first cathode electrocatalytic layer and in contact with the second cathode spacer.

In addition, the anode may include an anode current collector, an anode electrocatalytic layer electrically coupled with the anode current collector, and an anode spacer formed of a conductive material and disposed between the anode electrocatalytic layer and the anode current collector. An area of the anode electrocatalytic layer may be equal to a total area obtained by adding an area of the first and the second cathode electrocatalytic layers.

In addition, the cathode may include a cathode current collector including a first cathode current collector and a second cathode current collector, a cathode electrocatalytic layer including a first cathode electrocatalytic layer and a second cathode electrocatalytic layer electrically coupled with the cathode current collector, and a cathode spacer formed of the conductive material and disposed between the cathode electrocatalytic layer and the cathode current collector.

In addition, the multi-cell may further include a bipolar plate. The bipolar plate may include a first bipolar plate, a second bipolar plate disposed separately from the first bipolar plate, and a bipolar gasket disposed between the first and the second bipolar plates to electrically isolate them from each other.

The solutions to the above-described problems do not list all features of the present disclosure. Various features of the present disclosure and advantages and effects thereof may be understood in more detail with reference to specific description below.

### [Advantageous Effects of Invention]

According to the present disclosure, a direct seawater electrolysis device capable of effectively preventing the formation of inorganic precipitates in components other than the electrode may be realized.

According to another aspect of the present disclosure, a direct seawater electrolysis device in which a cell voltage can be stably maintained during long-term operation may be realized.

According to still another aspect of the present disclosure, a multi-cell which may reduce internal resistance may be realized.

According to still another aspect of the present disclosure, a system which may recover magnesium hydroxide with various application fields may be realized.

Hereinafter, in addition to the above-described advantageous effects, specific advantageous effects of the present disclosure will be described together with specific contents for carrying out the invention. In addition, the advantageous effects of the present disclosure are not limited to the above-described advantageous effects, and may be easily implemented by means and combinations thereof which are described in the specification.

### [Brief Description of Drawings]

FIG. 1 illustrates a direct seawater electrolysis device according to a first embodiment of the present disclosure.
FIG. 2 is a cross-sectional view taken along line A in FIG. 1.
FIG. 3 is a cross-sectional view taken along line B in FIG. 1.
FIG. 4 illustrates a cathode current collector of the direct seawater electrolysis device according to the first embodiment of the present disclosure.
FIG. 5 illustrates a subplate of the direct seawater electrolysis device according to the first embodiment of the present disclosure.
FIG. 6 illustrates a cathode spacer and a cathode gasket of the direct seawater electrolysis device according to the first embodiment of the present disclosure.
FIG. 7 illustrates a cathode gasket, a cathode spacer, and a cathode electrocatalytic layer of the direct seawater electrolysis device according to the first embodiment of the present disclosure.
FIG. 8 is a cross-sectional view of a direct seawater electrolysis multi-cell according to another aspect of the first embodiment of the present disclosure.
FIG. 9 is a schematic diagram illustrating a magnesium hydroxide recovery system according to still another aspect of the first embodiment of the present disclosure.
FIG. 10 is a graph of a time-dependent cell voltage of the direct seawater electrolysis device in an application example and a comparative example according to the first embodiment of the present disclosure.
FIG. 11 illustrates results of X-ray Diffraction (XRD) analysis of magnesium hydroxide recovered from a magnesium hydroxide recovery system in Manufacturing Example 2 according to the first embodiment of the present disclosure.
FIG. 12 illustrates a Scanning Electron Microscope (SEM) image of magnesium hydroxide recovered from a magnesium hydroxide recovery system in Manufacturing Example 2 according to the first embodiment of the present disclosure.
FIG. 13 illustrates a graph illustrating a specific surface area depending on a pore diameter of the magnesium hydroxide recovered from the magnesium hydroxide recovery system in Manufacturing Example 2 according to the first embodiment of the present disclosure.
FIG. 14 illustrates an argon gas adsorption/desorption isotherm graph of the magnesium hydroxide recovered from the magnesium hydroxide recovery system in Manufacturing Example 2 according to the first embodiment of the present disclosure.
FIG. 15 illustrates a vapor adsorption isotherm graph of the magnesium hydroxide recovered from the magnesium hydroxide recovery system in Manufacturing Example 2 according to the first embodiment of the present disclosure.
FIG. 16 is a view illustrating a direct seawater electrolysis device according to a second embodiment of the present disclosure.
FIG. 17 is a view taken along line A in FIG. 16.
FIG. 18 is a view taken along line A in FIG. 16.
FIG. 19 is a view illustrating a subplate of the direct seawater electrolysis device according to the second embodiment of the present disclosure.
FIG. 20 is a view illustrating a cathode spacer pole of the direct seawater electrolysis device according to the second embodiment of the present disclosure.
FIG. 21 is a view illustrating a moving state of the cathode spacer pole of the direct seawater electrolysis device according to the second embodiment of the present disclosure.
FIG. 22 is a view illustrating an anode electrocatalytic layer, an anode spacer, and an anode gasket of the direct seawater electrolysis device according to the second embodiment of the present disclosure.
FIG. 23 is a view illustrating a cathode electrocatalytic layer, a cathode spacer pole, and a cathode gasket of the direct seawater electrolysis device according to the second embodiment of the present disclosure.
FIG. 24 is a view illustrating a multi-cell of the direct seawater electrolysis device according to the second embodiment of the present disclosure.
FIG. 25 is a view illustrating a direct seawater electrolysis device including a plurality of cathodes according to a third embodiment of the present disclosure.
FIG. 26 is a cross-sectional view taken along line A in the direct seawater electrolysis device including the plurality of cathodes according to the third embodiment of the present disclosure in FIG. 25.
FIG. 27 is a cross-sectional view taken along line B in the direct seawater electrolysis device including the plurality of cathodes according to the third embodiment of the present disclosure in FIG. 25.
FIG. 28 is a view illustrating a cathode current collector in the direct seawater electrolysis device including the plurality of cathodes according to the third embodiment of the present disclosure.
FIG. 29 is a view illustrating a subplate in the direct seawater electrolysis device including the plurality of cathodes according to the third embodiment of the present disclosure.
FIG. 30 is a view illustrating a cathode gasket and a cathode spacer in the direct seawater electrolysis device including the plurality of cathodes according to the third embodiment of the present disclosure.
FIG. 31 is a view illustrating a cathode gasket and a cathode electrocatalytic layer in the direct seawater electrolysis device including the plurality of cathodes according to the third embodiment of the present disclosure.
FIG. 32 is a view illustrating an anode gasket and an anode electrocatalytic layer in the direct seawater electrolysis device including the plurality of cathodes according to the third embodiment of the present disclosure.
FIG. 33 is a cross-sectional view in which the multi-cell of the direct seawater electrolysis device including the plurality of cathodes is taken along line B of the direct seawater electrolysis device including the plurality of cathodes according to the third embodiment of the present disclosure in FIG. 25, in another example according to the third embodiment of the present disclosure.
FIG. 34 is a view of one surface of a bipolar plate in contact with a subplate, in the direct seawater electrolysis device including the plurality of cathodes, in another example according to the third embodiment of the present disclosure.
FIG. 35 is a view illustrating the other surface of the bipolar plate in contact with an anode spacer, in the direct seawater electrolysis device including the plurality of cathodes, in another example according to the third embodiment of the present disclosure.
FIG. 36 is a cross-sectional view taken along lines A, B, and C of the direct seawater electrolysis device including the plurality of cathodes, in another example of the third embodiment of the present disclosure in FIG. 35.

### [Mode for the Invention]

In the present specification, singular expressions include plural expressions unless the context clearly indicates otherwise.

The terms "comprise" and/or "comprising" in the present specification specify the presence of described shapes, steps, numbers, operations, members, elements, and/or groups thereof, but do not preclude the presence or addition of one or more other shapes, steps, numbers, operations, members, elements, and/or groups thereof.

In the present specification, "at least one of a, b, and c" may include a, b or c alone, or a combination of two or more selected from a group consisting of a, b, and c.

The term "couple" as used in the present specification not only means that certain members are directly coupled, but also is a concept including one in which another member is interposed the members and indirectly coupled.

When several examples are described in the present specification, unless described otherwise, respective examples may be combined. In this case, advantageous effects of the present disclosure may be defined as including advantageous effects achieved from each example and advantageous effects achieved from an organic combination of the respective examples. For example, even when Examples 1 and 2 are independently described in the present specification, Examples 1 and 2 may be organically combined with each other unless the context clearly indicates otherwise, and the advantageous effects of the present disclosure may include advantageous effects achieved from a combination of Examples 1 and 2.

A numerical range indicated by the term "to" in the present specification represents a numerical range in which values described before and after the term are respectively included as a lower limit value and an upper limit value. When a plurality of numerical values are described as an upper limit and a lower limit of any numerical range, the numerical range described in the present specification may be understood as any numerical range in which any one of a plurality of lower limit values and any one of a plurality of upper limit values are respectively used as the lower limit value and the upper limit value. For example, when a to b, or c to d are described in the specification, it may be understood that a or more and b or less, a or more and d or less, c or more and d or less, or c or more and b or less are described.

In the present specification, terms such as "about" or "substantially" mean a reasonable amount of variation in the modified term so that a final result is not significantly changed. These terms may be interpreted as including a variation of at least ±5% or at least ±10% within a limit in which the variation modifies the meaning of the terms and does not invalidate the meaning of the terms.

In the present specification, a film may include a case where the film is formed over an entire area when the film is observes a region where the film exists, but also a case where the film is formed in only a portion of the region. For example, it may be defined that a surface of the film is a flat shape, a non-flat shape, and a combination thereof, or a continuous shape, a discontinuous shape, and a combination thereof. For example, when another member is formed as a film directly on one member, it may be defined that a coverage of another member with respect to the surface of the one member is 1% or more, 5% or more, 10% or more, 20% or more, 30% or more, 40% or more, 50% or more, 60% or more, 70% or more, 80% or more, 85% or more, 90% or more, 95% or more, or 99% or more.

In the present specification, "a conductive material" may mean a material having an electrical conductivity of 28,000 S/m or higher at 20°C, and "a non-conductive material" may mean a material having an electrical conductivity of lower than 28,000 S/m, 1 S/m or lower, 0.01 S/m or lower, and specifically 0.0004 S/m or lower at the above-described temperature. For example, an electrical conductivity meter commercially available in the related art (for example, a portable resistivity meter (HI-87314) from UINS Instruments Co., Ltd.) may be used as a method for distinguishing between the conductive material and the non-conductive material.

In the present specification, "a direct seawater electrolysis device" may mean an electrolysis device that directly uses seawater as an electrolyte.

In the present specification, "a stacking direction of the direct seawater electrolysis device" may be defined as a direction in which each component is stacked during a process of assembling the direct seawater electrolysis device. For example, the stacking direction of the direct seawater electrolysis device may be a thickness direction of each component.

Hereinafter, configurations of a first embodiment, a second embodiment, and a third embodiment of the present disclosure will be sequentially described in more detail with reference to the drawings.

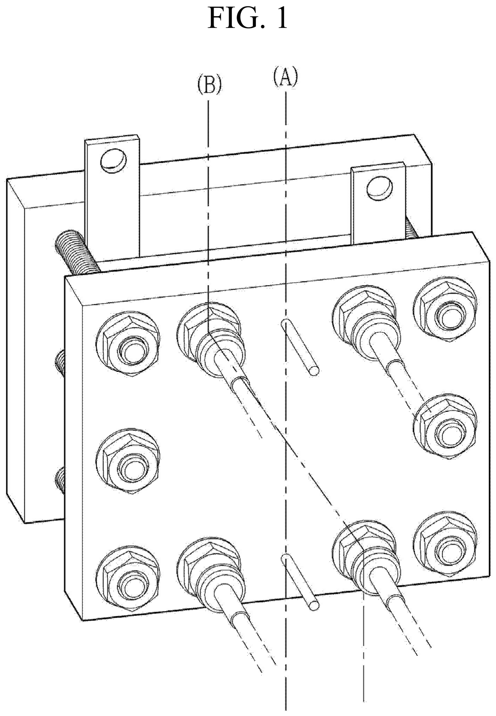

Referring to FIGS. 1 to 15, the direct seawater electrolysis device, a direct seawater electrolysis multi-cell, and a magnesium hydroxide recovery system including the same according to the first embodiment of the present disclosure will be described in detail.

### 1. Direct Seawater Electrolysis Device

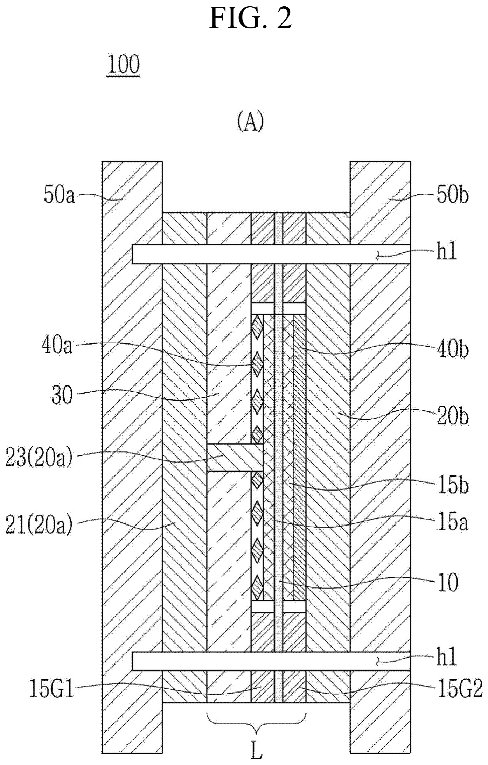

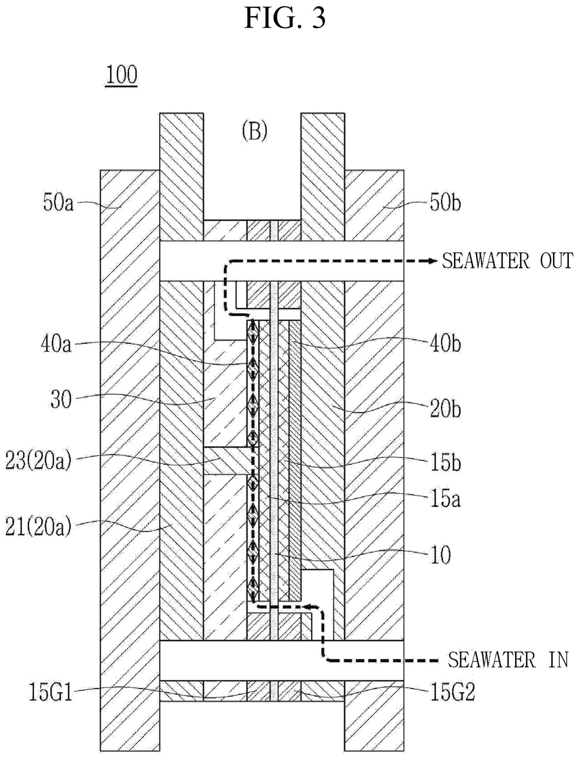

FIG. 1 illustrates the direct seawater electrolysis device according to the first embodiment of the present disclosure. FIG. 2 is a cross-sectional view taken along line A in FIG. 1. FIG. 3 is a cross-sectional view taken along line B in FIG. 1.

Referring to FIGS. 1 to 3, a direct seawater electrolysis device 100 according to the first embodiment of the present disclosure may include a cathode electrocatalytic layer 15a, an anode electrocatalytic layer 15b, a bipolar membrane 10, and a cathode current collector 20a.

### Cathode Electrocatalytic Layer

The cathode electrocatalytic layer 15a according to the first embodiment of the present disclosure may mean an electrode immersed in the seawater, where water reduction reaction occurs. Here, the catholyte may include the seawater. Specifically, the reduction reaction of the water may proceed on a surface of the cathode electrocatalytic layer 15a, and a hydrogen gas and hydroxide ions may be generated.

In some examples, the seawater may contain approximately 2 to 4 wt% of salts, unlike pure water. Specifically, the seawater may contain chloride anions, sodium cations, sulfate anions, magnesium cations, calcium cations, potassium cations, carbonate anions, bromine anions, borate anions, strontium cations, and the like.

In some examples according to the first embodiment of the present disclosure, the seawater may include low grade water. Here, the low grade water may include at least one of sewage effluent, brine, and concentrated water. According to some examples of the present disclosure, since the low grade water is included in the seawater, both the costs and time required for treating the low grade water may be saved. In addition, a resource that may be used for fuel cells may be provided by generating the hydrogen gas, and environmental pollution may be reduced.

In some examples according to the first embodiment of the present disclosure, a concentration of MgCl₂ contained in the seawater may be 2 mM or higher. According to some examples of the present disclosure, if the concentration of MgCl₂ contained in the seawater is lower than the above-described range, acidification of the seawater may not proceed properly, and an undesirable increase in pH may occur. When the pH of the seawater increases, inorganic precipitates may be thickly formed on the cathode electrocatalytic layer 15a, thereby causing a problem in that a speed of a water reduction occurring at an interface of the cathode electrocatalytic layer 15a becomes slower.

In some examples, the cathode electrocatalytic layer 15a may include a material having conductive properties commercially available in the related art without any particular limitation. Specifically, the cathode electrocatalytic layer 15a may include at least one type selected from the group consisting of copper, cadmium, tin, lead, titanium, platinum group metal, a nickel alloy, an iron alloy, a cobalt alloy, stainless steel, hastelloy, and a gas diffusion electrode, and specifically, may include a platinum-coated titanium mesh or foam electrode. In this case, when the platinum-coated titanium foam electrode is used as the cathode electrocatalytic layer 15a, the cathode electrocatalytic layer 15a has corrosion resistance in an environment where water reduction reaction occurs in seawater, and may achieve a low overvoltage and high electrical conductivity for seawater electrolysis.

### Anode Electrocatalytic Layer

The anode electrocatalytic layer 15b according to the first embodiment of the present disclosure may be an electrode immersed in an anolyte, where oxygen evolution reaction occurs. Specifically, on a surface of the anode electrocatalytic layer 15b, hydroxide ions contained in an alkaline solution used as the anolyte lose electrons and be converted into oxygen gas.

In some examples, the anolyte may include the alkaline solution having the pH of 9 or higher, 10 or higher, or 11 or higher, and specifically, may include at least one of NaOH and KOH. Specifically, since the alkaline solution is used as the anolyte, a water level of an electrolyte solution may be stabilized, and the amount of the oxygen gas may be increased in the anode.

In some examples, the anolyte may further include the seawater in addition to the alkaline solution. In this case, a volume ratio of the alkaline solution and the seawater (alkaline solution : seawater) may be 9:1 to 6:4. In this case, the pH of the seawater treated with alkaline solution may be preferably 9 or higher.

In some examples, the anode electrocatalytic layer 15b may include at least one type selected from the group consisting of copper, cadmium, tin, lead, titanium, a nickel alloy, stainless steel, platinum, an oxide of platinum group metal, and a manganese oxide. Specifically, when a titanium mesh or a foam electrode is used as a base material of the anode electrocatalytic layer 15b and the oxide of the platinum group metal is used as a coating layer, the anode electrocatalytic layer 15b has low resistivity and high thermochemical stability, and has metallic electrical conductivity although the material is the oxide. Therefore, excellent functions may be realized as an electrocatalyst and a diffusion barrier. For example, the nickel alloy may include a nickel-iron alloy, and the oxide of the platinum group metal may include at least one selected from the group consisting of a ruthenium oxide (RuO₂), an iridium oxide (IrO₂), and a composite oxide of ruthenium and iridium (RuO₂-IrO₂).

### Bipolar Membrane

The bipolar membrane 10 according to the first embodiment of the present disclosure may be installed as a diaphragm between the cathode electrocatalytic layer 15a and the anode electrocatalytic layer 15b to prevent gases or solutions generated at each electrode from being mixed. Specifically, the bipolar membrane 10 may include a first membrane transporting protons and a second membrane transporting hydroxide anions. For example, the first membrane may be a cation exchange layer (CEL), and the second membrane may be an anion exchange layer (AEL). In this case, the first membrane may be closer to the cathode electrocatalytic layer 15a than the second membrane, and the second membrane may be closer to the anode electrocatalytic layer 15b than the first membrane.

In some examples according to the first embodiment of the present disclosure, a channel (not illustrated) through which water is supplied between the first membrane and the second membrane may be further provided. In this case, the water flowing through the channel is decomposed by the bipolar membrane 10 under an applied voltage. As a result, the protons may be transported to the catholyte (seawater) through the first membrane, and the hydroxide anions may be transported to the anolyte through the second membrane. Accordingly, continuous acidification of the seawater as the catholyte may be induced, which may lower an overpotential for the water reduction reaction and reduce power consumption for hydrogen production.

### Cathode Current Collector

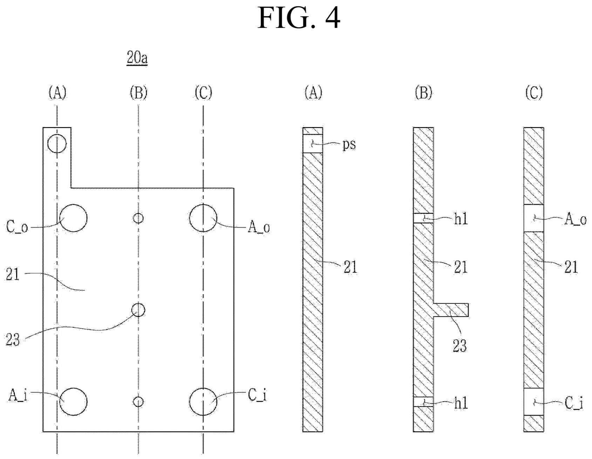

FIG. 4 illustrates the cathode current collector of the direct seawater electrolysis device according to the first embodiment of the present disclosure.

Referring to FIGS. 1 to 4, the cathode current collector 20a according to the first embodiment of the present disclosure may include a cathode current collector body 21 separated from the cathode electrocatalytic layer 15a and the cathode current collector coupler 23 in contact with a portion of the cathode electrocatalytic layer 15a. Specifically, the cathode current collector 20a may be disposed on the cathode electrocatalytic layer 15a, and more specifically, the cathode current collector coupler 23 may be disposed between the cathode current collector body 21 and the portion of the cathode electrocatalytic layer 15a.

The cathode current collector 20a according to the first embodiment of the present disclosure may provide a pathway for a current flow. In the related art, when the cathode current collector 20a formed of a conductive material is in direct contact with seawater, the water reduction reaction occurs not only on the cathode electrocatalytic layer 15a but also on the surface of the cathode current collector 20a, thereby causing the formation of inorganic precipitates on the cathode current collector 20a. According to one aspect of the first embodiment of the present disclosure, the cathode current collector body 21 is in contact with the subplate 30 formed of a non-conductive material without being in contact with the seawater. Therefore, the formation of the inorganic precipitates due to the water reduction reaction may be prevented. In this case, since only the cathode current collector coupler 23 is in contact with the cathode electrocatalytic layer 15a, the inorganic precipitates are effectively prevented from being formed on the whole cathode current collector 20a (specifically, the cathode current collector body 21). As a result, an excessive increase in cell resistance may be avoided, and the cell voltage may be stably maintained during long-term operation.

In some examples, in the stacking direction of the direct seawater electrolysis device 100, the thickness of the cathod current collector body 21 may be 1 mm to 2 mm.

The cathode current collector coupler 23 according to the first embodiment of the present disclosure may be electrically coupled with the cathode electrocatalytic layer 15a. Specifically, the cathode current collector coupler 23 may be interposed between the cathode current collector body 21 and the cathode electrocatalytic layer 15a. In this case, the cathode current collector coupler 23 and the cathode current collector body 21 are distinguished for convenience of description, and may mean that both are formed as one body. In some examples, in the stacking direction of the direct seawater electrolysis device 100, the thickness of the cathode current collector coupler 23 may be 5 mm to 10 mm.

In some examples, the conductive material is not particularly limited, and specifically, may include electrically conductive metal or an alloy material. More specifically, the conductive material may include one or more types of aluminum, copper, a nickel-iron alloy, a nickel-molybdenum alloy, a nickel-chromium alloy, titanium, and SUS.

In some examples, the non-conductive material may include at least one of a plastic resin, a silicone resin, diene rubber, and a glass fiber, specifically, may include at least one of a plastic resin and a silicone resin. More specifically, the non-conductive material may include at least one of polyurethane, polyvinyl chloride, polyolefin, polyphenylene oxide, polybutylene terephthalate, polyethylene terephthalate, a phenol resin, a fluorinated resin, an epoxy resin, a polyimide resin, an acrylic resin, a polyphenylene sulfide, a polyamide, and a polycarbonate.

In some examples of the present disclosure, when the cathode current collector 20a is cut along lines A to C, a hole ps for fixing a cable of a power supply device may be provided in a cross-sectional view taken along line A. A guide hole h1 may be provided in a cross-sectional view taken along line B, and a seawater inlet C_i and an anolyte outlet A_o may be provided in a cross-sectional view taken along line C.

### Subplate

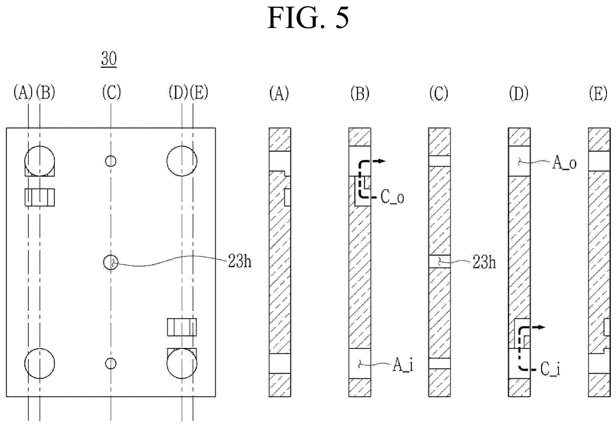

FIG. 5 illustrates a subplate of the direct seawater electrolysis device according to the first embodiment of the present disclosure.

Referring to FIGS. 1 to 3 and 5, the direct seawater electrolysis device 100 according to the first embodiment of the present disclosure may include a subplate 30. Specifically, the subplate 30 may include the non-conductive material described above, and may include a seawater inlet C_i and a seawater outlet C_o through which the seawater as the cathode may pass.

The subplate 30 according to the first embodiment of the present disclosure may have one or more through-holes 23h at positions corresponding to the cathode current collector coupler 23. In this case, the through-hole 23h may be appropriately modified depending on the number of the cathode current collector couplers 23.

In some examples according to the first embodiment of the present disclosure, at least one or more cathode current collector couplers 23 may protrude from a first surface of the cathode current collector body 21 in the stacking direction of the direct seawater electrolysis device 100. Specifically, two or more cathode current collector couplers 23 may protrude, and more specifically, the number of couplers may range from on to forty. Here, a first surface of the cathode current collector body 21 may refer to a surface in contact with the subplate 30 and the cathode current collector 20a. According to some examples in the first embodiment of the present disclosure, the subplate 30 formed of the non-conductive material may cover an entire area of the first surface of the cathode current collector body 21. Accordingly, the cathode current collector body 21 formed of the conductive material is not in contact with the seawater. Therefore, the water reduction reaction does not occur on the cathode current collector body 21, and an advantageous effect in which the inorganic precipitates are not formed may be achieved.

On the other hand, the cathode current collector coupler 23 may maintain electrical conductivity of the direct seawater electrolysis device 100 at a proper level by coming into contact with a portion of the cathode electrocatalytic layer 15a through the through-hole 23h.

In some examples according to the first embodiment of the present disclosure, when the subplate 30 is taken along lines A to E, a cross-section illustrated in FIG. 5 may appear. For example, the cross-section taken along line B may include an anolyte inlet A_i and a seawater outlet C_o, the cross-section taken along line C may include a through-hole 23h, and the cross-section taken along line D may include a seawater inlet C_i and an anolyte outlet A_o.

### Cathode Spacer

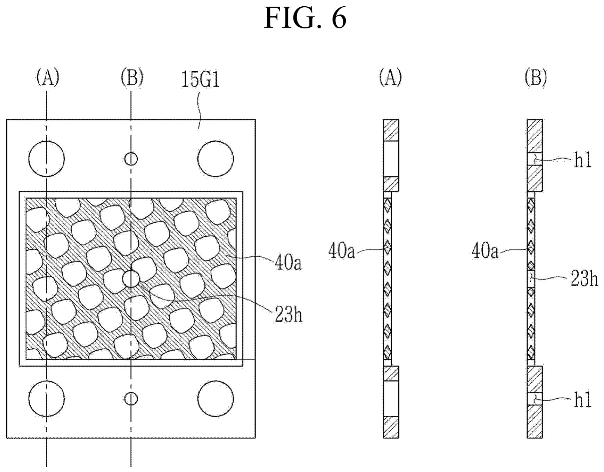

FIG. 6 illustrates a cathode spacer and a cathode gasket of the direct seawater electrolysis device according to the first embodiment of the present disclosure.

Referring to FIGS. 1 to 3 and 6, a cathode spacer 40a according to the first embodiment of the present disclosure may maintain a gap between the cathode current collector body 21 of the cathode current collector 20a and a membrane-electrode assembly to provide a flow path through which the seawater as the electrolyte may flow.

The cathode spacer 40a according to the first embodiment of the present disclosure may be disposed on the cathode electrocatalytic layer 15a, and more specifically, may be interposed between the subplate 30 and the cathode electrocatalytic layer 15a.

The cathode spacer 40a according to the first embodiment of the present disclosure may include one or more through-holes 23h at positions corresponding to the cathode current collector coupler 23.

In some examples, a diameter of the through-hole 23h may be 1 mm to 5 mm.

In some examples, the cathode spacer 40a may include a porous structure, and may internally include a plurality of holes in addition to the through-hole 23h.

In some examples according to the first embodiment of the present disclosure, when an assembly in which the cathode gasket 15G1 and the cathode spacer 40a are combined is taken along line A or B, the through-hole 23h may not be provided in line (A), and the through-hole 23h through which the cathode current collector coupler 23 may pass may be provided in line (B).

### Cathode Gasket

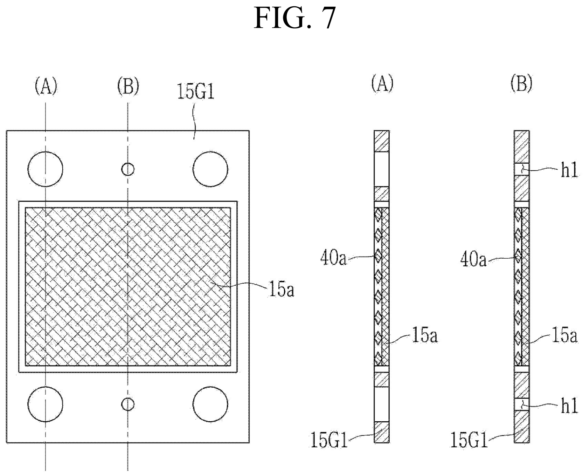

FIG. 7 illustrates a cathode gasket, a cathode spacer, and a cathode electrocatalytic layer of the direct seawater electrolysis device according to the first embodiment of the present disclosure.

Referring to FIGS. 1 to 3 and 7, the cathode gasket 15G1 according to the first embodiment of the present disclosure may seal the cathode electrocatalytic layer 15a to prevent a loss of the catholyte. Additionally, the cathode gasket 15G1 may fix the cathode spacer 40a in addition to the cathode electrocatalytic layer 15a.

The cathode gasket 15G1 according to the first embodiment of the present disclosure may be interposed between the subplate 30 and the bipolar membrane 10. Specifically, the cathode gasket 15G1 may include a guide hole h1 into which a guide pin (not illustrated) may be inserted.

### Relationship between Components

According to some examples of the first embodiment of the present disclosure, both the subplate 30 and the cathode spacer 40a are formed of the non-conductive material. In this manner, the inorganic precipitates are effectively prevented from being formed in the cathode current collector body 21 of the cathode current collector 20a, thereby effectively preventing an excessive increase in the resistance of the cell. Accordingly, the voltage may be stably maintained during a long-term operation of the cell.

As illustrated in FIG. 2, in some examples, the subplate 30, the cathode and the anode gaskets 15G1 and 15G2, the cathode, the anode spacers 40a and 40b, and the membrane-electrode assemblies 10, 15a, and 15b may be defined as a unit stack L. Here, one or more unit stacks L may be provided when applied to the multi-cell.

### Additional Components

Referring to FIGS. 2 and 3, the anode current collector 20b according to the first embodiment of the present disclosure may be disposed on the anode electrocatalytic layer 15b. Specifically, the anode current collector 20b may be disposed to face the cathode current collector 20a. Here, the anode current collector 20b may provide a route for the current movement, as in the cathode current collector 20a.

The anode spacer 40b according to the first embodiment of the present disclosure may be interposed between the anode electrocatalytic layer 15b and the anode current collector 20b. Specifically, the anode spacer 40b may fulfill a function of providing a flowing path of an electrolyte by maintaining a gap between the anode electrocatalytic layer 15b and the anode current collector 20b.

The anode gasket 15G2 according to the first embodiment of the present disclosure may be interposed between the bipolar membrane 10 and the anode current collector 20b. Specifically, the anode gasket 15G2 may effectively prevent a loss of the anolyte.

In some examples, the anode current collector 20b and the anode spacer 40b may include the conductive material commercially available in the related art without any particular limitation.

Some examples according to the first embodiment of the present disclosure may include a cathode end plate 50a and an anode end plate 50b which are respectively disposed in both end portions of the direct seawater electrolysis device 100. For example, the cathode end plate 50a and the anode end plate 50b may face each other.

In some examples according to the first embodiment of the present disclosure, a cation exchange membrane (not illustrated) may be additionally provided between the bipolar membrane 10 and the anode electrocatalytic layer 15b. In this case, the cation exchange membrane is a membrane selective for sodium ions or potassium ions, and may transport the sodium ions or the potassium ions to a production channel (to be described later) for a charge neutrality condition of the anolyte.

In some examples according to the first embodiment of the present disclosure, the production channel (not illustrated) may be interposed between the bipolar membrane 10 and the cation exchange membrane. Specifically, the production channel may provide a passage for discharging the sodium ions or the potassium ions outward for the charge neutrality condition of the anolyte.

### 2. Direct Seawater Electrolysis Multi-Cell

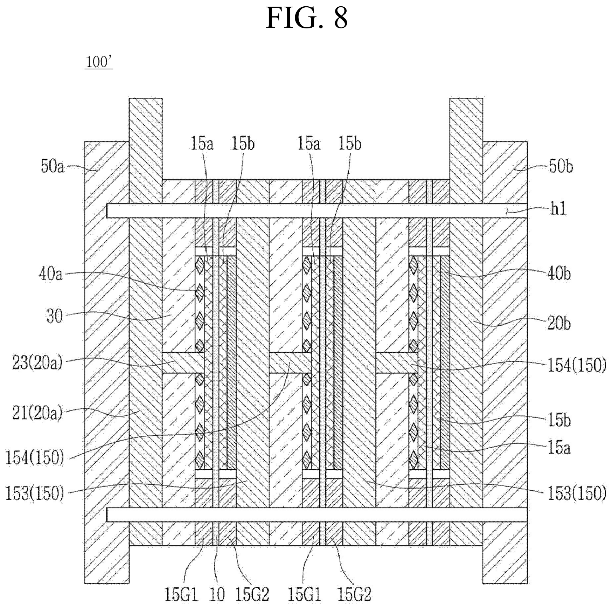

FIG. 8 is a cross-sectional view of the direct seawater electrolysis multi-cell according to another aspect of the first embodiment of the present disclosure. The repeated description will be briefly described or omitted.

Referring to FIG. 8, according to another aspect of the first embodiment of the present disclosure, some examples may include a direct seawater electrolysis device 100' and one or more bipolar plates 150 on the direct seawater electrolysis device 100'.

One or more bipolar plates 150 according to the first embodiment of the present disclosure may be provided to couple or isolate mutually different membrane-electrode assemblies. Specifically, each of the bipolar plates 150 may include a bipolar plate body 153 separated from the cathode electrocatalytic layer 15a, and a bipolar plate coupler 154 in contact with a portion of the cathode electrocatalytic layer 15a. Here, the bipolar plate body 153 and the bipolar plate coupler 154 may include the conductive material. The subplate 30 formed of the non-conductive material may be brought into contact with the bipolar plate body 153 of the bipolar plate 150 to prevent direct contact with the seawater. Accordingly, the inorganic precipitates may be effectively prevented from being formed, thereby effectively preventing an excessive increase in the resistance of the cell. Accordingly, the voltage may be stably maintained during a long-term operation of the cell.

In some examples according to the first embodiment of the present disclosure, at least one bipolar plate coupler 154 may protrude from a first surface of the bipolar plate body 153 in the stacking direction of the direct seawater electrolysis device 100'. Here, the first surface of the bipolar plate body 153 may be a surface with which the subplate 30 and the bipolar plate body 153 come into contact.

In some examples, the number of the bipolar plates 150 may vary depending on the number of multi-cells stacked.

In some examples according to the first embodiment of the present disclosure, the bipolar plate coupler 154 may be interposed between the bipolar plate body 153 and a portion of the cathode electrocatalytic layer 15a. In this case, the bipolar plate body 153 and the bipolar plate coupler 154 are distinguished for convenience of description, and may mean that both are formed as one body. In some examples, a through-hole 23h may be a hole through which the cathode current collector coupler 23 of the cathode current collector 20a or the bipolar plate coupler 154 of the bipolar plate 150 passes.

### 3. Magnesium Hydroxide Recovery System

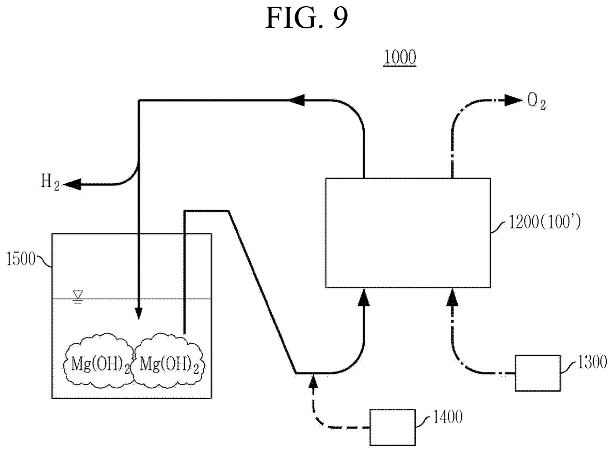

FIG. 9 is a schematic diagram illustrating a magnesium hydroxide recovery system according to still another aspect of the first embodiment of the present disclosure.

Referring to FIG. 9, a magnesium hydroxide recovery system 1000 according to the first embodiment of the present disclosure may include a direct seawater electrolysis multi-cell 1200 in some examples, an air bubble supply unit 1400 coupled with the direct seawater electrolysis multi-cell 1200, a catholyte supply unit 1500 for supplying the catholyte to the direct seawater electrolysis multi-cell 1200, and an anolyte supply unit 1300 for supplying the anolyte to the direct seawater electrolysis multi-cell 1200.

Alternatively, the direct seawater electrolysis multi-cell 1200 may be replaced with the direct seawater electrolysis device 100' in some examples.

The air bubble supply unit 1400 according to the first embodiment of the present disclosure may supply air bubbles to the catholyte. Here, the air bubbles may refer to gas pockets existing in the water. Accordingly, the inorganic precipitates adhering to the surface of the cathode electrocatalytic layer 15a which are generated during a long-term operation of the direct seawater electrolysis multi-cell 1200 may be effectively isolated.

In some examples, air content may be 20 to 100% (v/v), based on a total volume of the air bubbles supplied from the air bubble supply unit 1400 to the direct seawater electrolysis multi-cell 1200. For example, when only 100% air is injected, a pressure may be controlled to 0.2 to 1.0 MPa.

According to some examples of the first embodiment of the present disclosure, since the direct seawater electrolysis multi-cell 1200 and the air bubble supply unit 1400 coupled with the direct seawater electrolysis multi-cell 1200 are combined, the inorganic precipitates may be effectively isolated during a process of operating the direct seawater electrolysis multi-cell 1200.

In some examples, the inorganic precipitates adhering to the surface of the cathode electrocatalytic layer 15a may include magnesium hydroxide (Mg(OH)₂).

In some examples, the magnesium hydroxide may be widely applicable in various industrial fields such as an antioxidant, a nutrient strengthening agent, a flame retardant, an absorbent, an exhaust gas desulfurization treatment agent, an acid wastewater neutralizing agent, an artificial marble, a heavy oil additive, a detergent, and a salt stabilizer.

Hereinafter, embodiments of the present disclosure will be described in detail so that those skilled in the art to which the present disclosure belongs may easily implement the present disclosure. However, the embodiment is only an example, and the scope of rights of the present disclosure is not limited by the following contents.

### [Manufacturing Example 1: Manufacturing of Direct Seawater Electrolysis Device]

### <Example: Direct Seawater Electrolysis Device including Subplate Formed of Plastic Material, Cathode Current Collector, and Cathode Spacer>

The direct seawater electrolysis device 100 having the structure illustrated in FIGS. 1 and 2 is manufactured.

Specifically, the direct seawater electrolysis device 100 is manufactured by using guide pins to assemble the cathode current collector 20a including the cathode end plate 50a formed of an acetal (polyoxymethylene, POM) material, the cathode current collector body 21 formed of a titanium material, the cathode current collector coupler 23 formed of a titanium material, the subplate 30 formed of a polycarbonate material, the cathode spacer 40a formed of a polyethylene material, the cathode gasket 15G1 and the anode gasket 15G2 which are formed of a silicone material, the cathode electrocatalytic layer 15a formed of a platinum-coated titanium material, the bipolar membrane 10 including a cation exchange membrane and an anion exchange membrane, and the anode electrocatalytic layer 15b formed of an iridium-coated titanium material, the anode spacer 40b formed of a conductive material, the anode current collector 20b formed of a conductive material, and the anode end plate 50b formed of a conductive material.

In this case, 100 mL of the seawater having a MgCl₂ concentration of 100 mM is used as the catholyte, 100 mL of a NaOH aqueous solution (2 wt%) is used as the anolyte, and the bipolar membrane 10 is used as an ion exchange membrane.

### <Comparative Example: Existing Direct Seawater Electrolysis Device>

The direct seawater electrolysis device is manufactured in the same manner as in the example, except that both the subplate 30 and the cathode spacer 40a use the conductive material formed of a titanium material.

### [Experimental Example 1: Measurement of Time-dependent Cell Voltage]

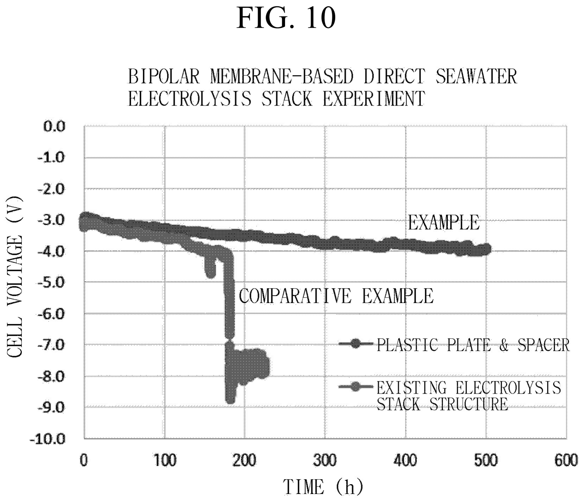

FIG. 10 is a graph of a time-dependent cell voltage of the direct seawater electrolysis device in an example and a comparative example according to the first embodiment of the present disclosure. In order to analyze time-dependent cell voltage performance, a Potentiostat (MP2C) analysis device from WonA Tech is used at room temperature under a constant current.

Referring to FIG. 10, unlike the comparative example, the example shows that a cell voltage is stably maintained even with the lapse of time.

### [Manufacturing Example 2: Magnesium Hydroxide Recovery System]

The direct seawater electrolysis device 100 of the example is operated for 100 hours, and thereafter, the air bubbles are injected into the stack at an injection pressure of 0.5 MPa for 10 minutes. As a result, magnesium hydroxide isolated from the surface of the cathode electrocatalytic layer 15a is recovered.

### [Experimental Example 2: XRD Analysis of Magnesium Hydroxide]

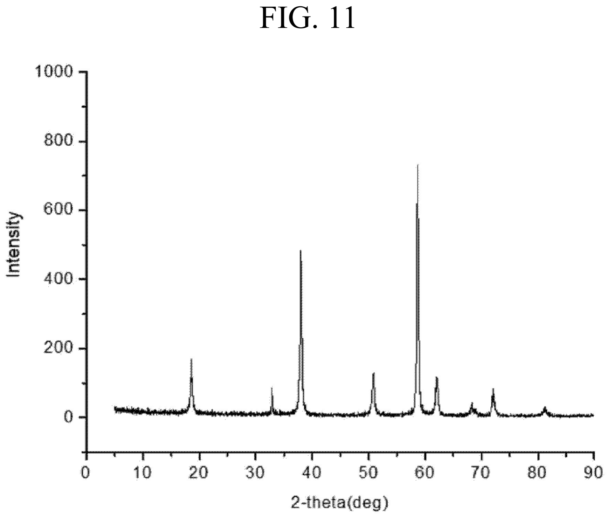

FIG. 11 illustrates results of XRD (X-ray Diffraction) analysis of the magnesium hydroxide recovered from the magnesium hydroxide recovery system 1000 in Manufacturing Example 2 according to the first embodiment of the present disclosure. Specifically, for the XRD analysis, a Smartlab system analysis device from Rigaku Holdings Corporation is used under a measurement condition of 9 kW (45 kV, 200 mA).

Referring to FIG. 11, it is confirmed that a peak corresponding to high-purity magnesium hydroxide is detected, and a peak corresponding to calcium-based inorganic precipitates such as Ca(OH)₂ or CaCO₃ are not detected.

### [Experimental Example 3: SEM Photograph of Magnesium Hydroxide]

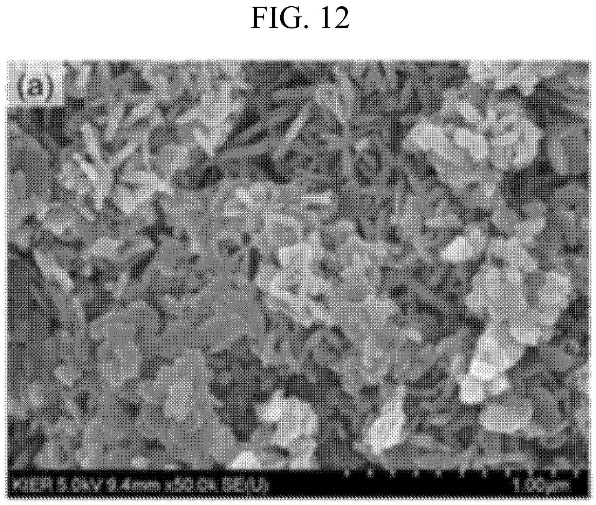

FIG. 12 is a Scanning Electron Microscope (SEM) photograph of the magnesium hydroxide recovered from the magnesium hydroxide recovery system in Manufacturing Example 2 according to the first embodiment of the present disclosure.

Referring to FIG. 12, it is confirmed that the recovered magnesium hydroxide has a porous structure. This reason may be presumed as follows. A process of forming the magnesium hydroxide and a dissolution process due to acidification of the seawater occur at the same time.

### [Experimental Example 4: Pore Distribution of Magnesium Hydroxide]

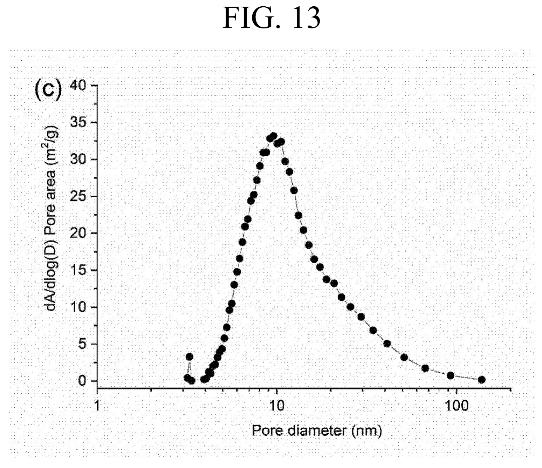

FIG. 13 is a graph illustrating a specific surface area depending on a pore diameter of the magnesium hydroxide recovered from the magnesium hydroxide recovery system in Manufacturing Example 2 according to the first embodiment of the present disclosure. Specifically, in order to measure a pore distribution of the magnesium hydroxide, a 3Flex 3500 unit analysis device from Micromeritics Instrument Corporation is used under a measurement condition of 88K.

Referring to FIG. 13, it may be confirmed that the pores included in the magnesium hydroxide are distributed in a range of approximately 5 nm to 100 nm.

### [Experimental Example 5: Isotherm Graph of Magnesium Hydroxide]

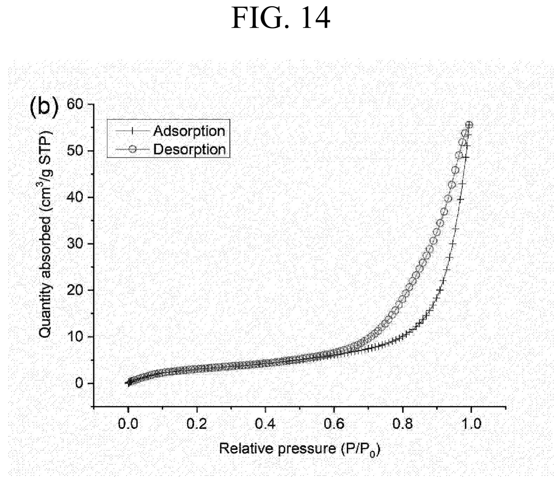

FIG. 14 is an argon gas adsorption/desorption isotherm graph of the magnesium hydroxide recovered from the magnesium hydroxide recovery system in Manufacturing Example 2 according to the first embodiment of the present disclosure. In order to analyze an argon gas adsorption/desorption isotherm, a 3Flex 3500 unit analysis device from Micromeritics Instrument Corporation is used under a measurement condition of 88 K.

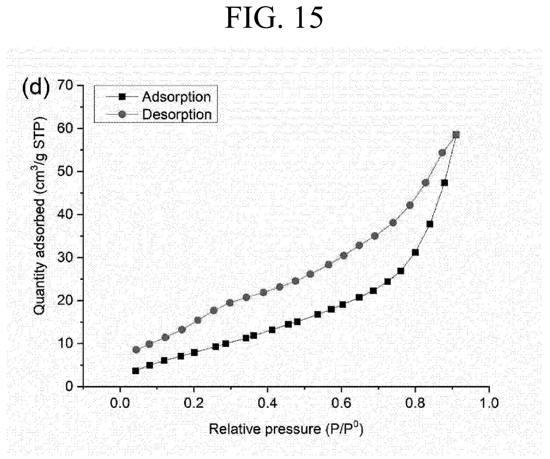

FIG. 15 is a vapor adsorption isotherm graph of the magnesium hydroxide recovered from the magnesium hydroxide recovery system in Manufacturing Example 2 according to the first embodiment of the present disclosure. In order to analyze a vapor adsorption isotherm, the 3Flex 3500 unit analysis device from Micromeritics Instrument Corporation is used within a measurement range of 0.01 to 0.92 (P/P0).

When FIG. 14 and FIG. 15 and the above-described experimental results are comprehensively considered, it is confirmed that the micron-, meso-, and macro-sized pores in the recovered magnesium hydroxide are interconnected.

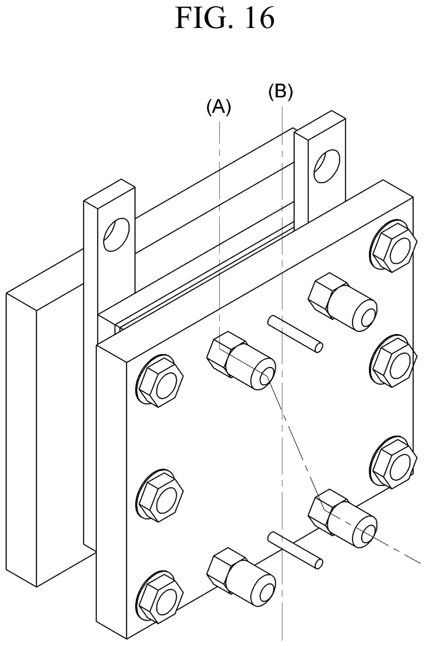

Hereinafter, a direct seawater electrolysis device and a direct seawater electrolysis multi-cell according to a second embodiment of the present disclosure will be described in detail with reference to FIGS. 16 to 24.

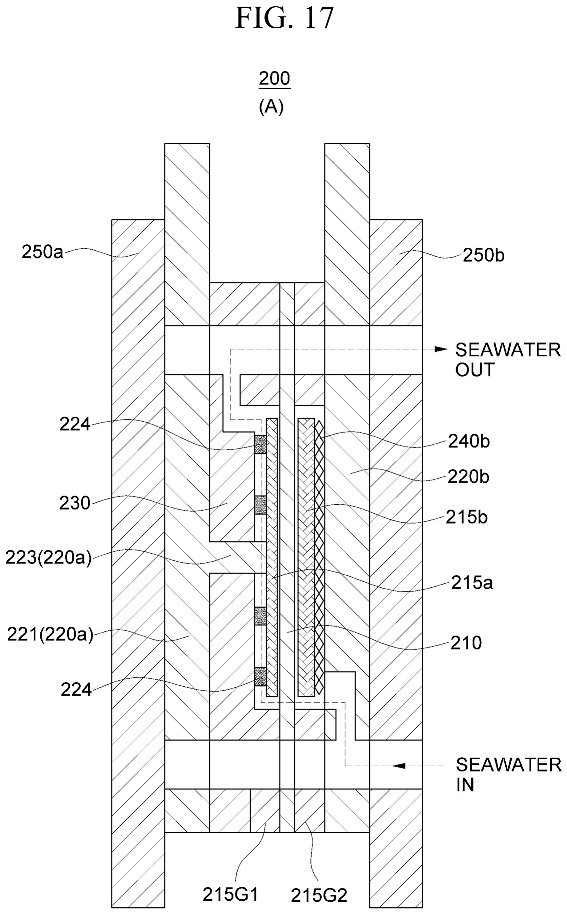

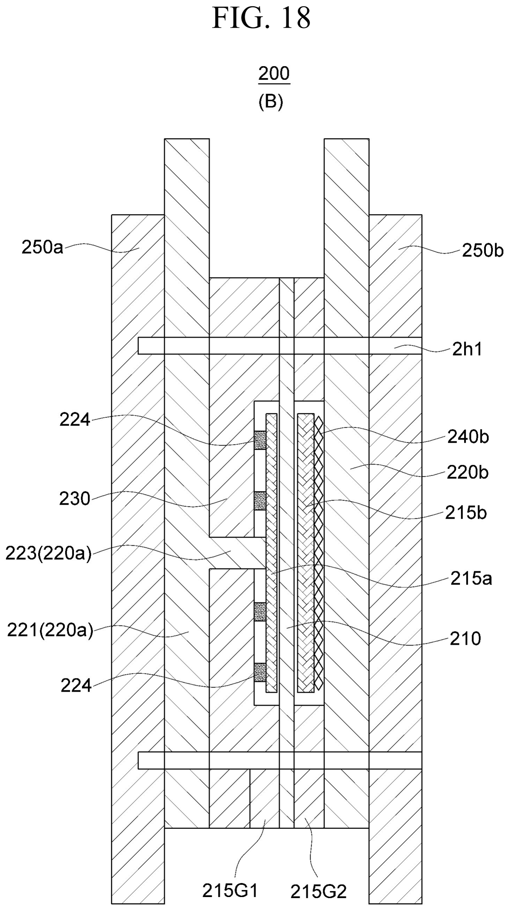

FIG. 16 is a view illustrating the direct seawater electrolysis device according to the second embodiment of the present disclosure. FIG. 17 is a view taken along line A in FIG. 16. FIG. 18 is a view taken along line B in FIG. 16.

Referring to FIGS. 16 to 18, a direct seawater electrolysis device 200 according to the second embodiment of the present disclosure may include an anode electrocatalytic layer 215b, a cathode electrocatalytic layer 215a, a bipolar membrane 210, a cathode current collector 220a, and a subplate 230.

That is, the direct seawater electrolysis device 200 according to the second embodiment of the present disclosure may include a cathode electrocatalytic layer 215a immersed in the seawater, an anode electrocatalytic layer 215b immersed in the anolyte, a bipolar membrane 210 interposed between the cathode electrocatalytic layer 215a and the anode electrocatalytic layer 215b, a cathode current collector 220a disposed on the cathode electrocatalytic layer 215a and including a cathode current collector body 221 and a cathode current collector coupler 223, and a subplate 230 disposed on the cathode electrocatalytic layer 215a. The cathode current collector 220a may include a cathode current collector body 221 separated from the cathode electrocatalytic layer 215a, and a cathode current collector coupler 223 in contact with a portion of the cathode electrocatalytic layer 215a and interposed between the cathode current collector body 221 and the portion of the cathode electrocatalytic layer 215a. The subplate 230 may be formed of the non-conductive material, may include one or more through-holes 223h at positions corresponding to the cathode current collector coupler 223, and may include a plurality of cathode spacer poles 224 forming a flow path of the seawater on one side surface facing the cathode electrocatalytic layer 215a.

In the second embodiment, in the subplate 230 including the non-conductive material, a seawater inlet (not illustrated) into which the seawater flows and a seawater outlet (not illustrated) through which the seawater is discharged may be respectively formed. A guide hole 2h1 in which a pair of guide pins (not illustrated) is installed may be formed in upper and lower portions of the direct seawater electrolysis device 200.

In addition, the cathode current collector coupler 223 of the cathode current collector 220a disposed on the cathode electrocatalytic layer 215a, and the cathode electrocatalytic layer 215a may be in electrical contact with each other to supply power. Since remaining portions other than the cathode current collector coupler 223 are covered with the subplate 230 formed of the non-conductive material, the cathode current collector body 221 of the cathode current collector 220a may not be in contact with the seawater.

In addition, a plurality of cathode spacer poles 224 formed on one side surface of the subplate 230 form a space through which the seawater may flow between the subplate 230 and the cathode electrocatalytic layer 215a, and a continuous water reduction reaction may occur in the cathode electrocatalytic layer 215a due to the seawater flowing in this space. The plurality of cathode spacer poles 224 are arrayed at regular intervals to uniformly maintain the space between the subplate 230 and the cathode electrocatalytic layer 215a. The plurality of cathode spacer poles 224 are illustrated in a cylindrical shape, but may have various structures such as a square column or a triangular column when the structure is formed to provide a seawater flowing space between the subplate 230 and the cathode electrocatalytic layer 215a.

A material of the cathode spacer pole 224 may be the same as a material of the non-conductive subplate 230.

Accordingly, water reduction reaction on the cathode current collector body 221 of the cathode current collector 220a may be prevented, thereby preventing the inorganic precipitates from being formed.

In FIG. 18, the bipolar membrane 210 of the direct seawater electrolysis device 200 may be interposed between a cathode gasket 215G1 and an anode gasket 215G2, and may further include a cathode end plate 250a interposed on the cathode current collector 220a and an anode end plate 250b interposed on the anode current collector 220b. Any one of the cathode end plate 250a and the anode end plate 250b may penetrate the entirety, and the other may further include a guide hole 2h1 penetrating a portion.

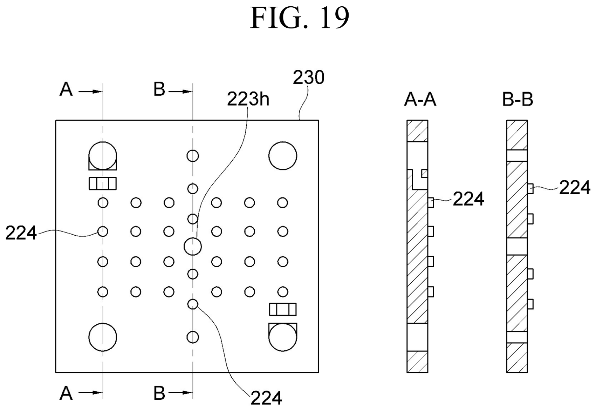

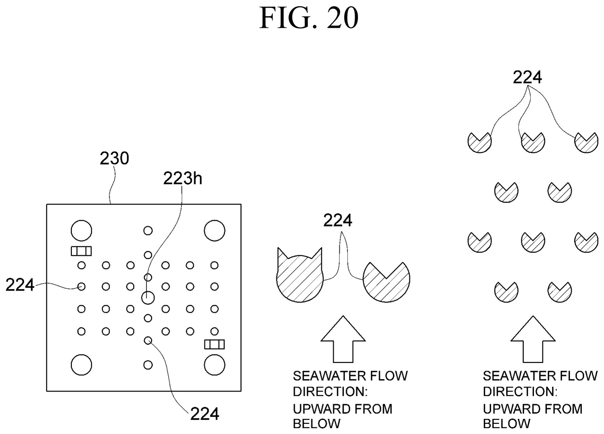

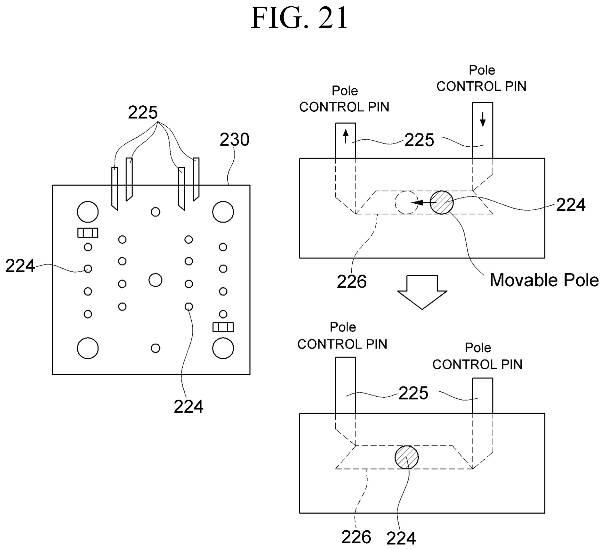

FIG. 19 is a view illustrating the subplate of the direct seawater electrolysis device according to the second embodiment of the present disclosure. FIG. 20 is a view illustrating the cathode spacer pole of the direct seawater electrolysis device according to the second embodiment of the present disclosure. FIG. 21 is a view illustrating a moving state of the cathode spacer pole of the direct seawater electrolysis device according to the second embodiment of the present disclosure.

Referring to FIGS. 19 to 21, the subplate 230 of the direct seawater electrolysis device 200 may include a plurality of cathode spacer poles 224, and the plurality of cathode spacer poles 224 may form a flow path through which the seawater flows by separating the cathode electrocatalytic layer 215a and the subplate 230.

The cathode spacer poles 224 formed on one side surface of the subplate 230 may be formed in a sufficient number to maintain the flow path. In the second embodiment, 30 cathode spacer poles 224 are illustrated. However, the number may be properly increased or decreased depending on a size of the subplate 230 and the required amount of the seawater.

The cathode spacer pole 224 of the subplate 230 is illustrated in a cylindrical shape, but there is no limitation on the shape, such as a pentagonal column, a square column, and a triangular column as long as the structure is used to provide a seawater flowing space between the subplate 230 and the cathode electrocatalytic layer 215a. In addition, a height of the cathode spacer pole 224 may be properly determined depending on the required amount of the seawater. For example, the height of the cathode spacer pole 224 may be 1 mm or higher and lower than 1 cm.

Referring to FIG. 19, the cathode spacer poles 224 of the subplate 230 are arrayed in a straight line, but there is no limitation on an arrangement form thereof. For example, the cathode spacer poles 224 may be disposed in a circular form, a diagonal form, a radial form, or a cross form.

The subplate 230 may include at least one of a silicone resin, diene rubber, and a glass fiber as the non-conductive material, specifically, may include at least one of a plastic resin and a silicone resin. More specifically, the subplate 230 may include at least one of polyurethane, polyvinyl chloride, polyolefin, polyphenylene oxide, polybutylene terephthalate, polyethylene terephthalate, a phenol resin, a fluorine-based resin, an epoxy resin, a polyimide resin, an acrylic resin, a polyphenylene sulfide, a polyamide, and a polycarbonate.

The subplate 230 may be manufactured by using the non-conductive material described above, and may have a seawater inlet and a seawater outlet through which the seawater may flow inward and outward.

Here, the cathode spacer pole 224 may be manufactured and disposed in various shapes which may induce a vortex of the seawater. Since the vortex is induced through the cathode spacer pole 224, the inorganic precipitates generated on the cathode electrocatalytic layer 215a or the cathode current collector coupler 223 may be physically easily removed, and a dissolution rate of the air bubbles may be increased when cleaned with the air bubbles.

In order to form the vortex, the cathode spacer pole 224 may adopt a structure which isolates a flow to easily form the vortex. In addition to a biconical shape or a water drop shape illustrated in FIG. 20, a hemispherical shape or a cone shape may be adopted. A biconical protrusion may generate the vortex by forming a low-pressure region when the flow is isolated near bicones as the seawater flows along the surface. The water droplet shape may assist the seawater to pass smoothly, may induce the flow to be isolated at an end, and may convert the seawater into a turbulent flow to generate the vortex.

From a viewpoint of vortex generation, it may be desirable to irregularly arrange the cathode spacer poles 224 so that the seawater flows along various paths to independently generate the vortex. In this case, a gap of the cathode spacer poles 224 may be maintained within a range in which the seawater may be converted to the turbulent flow around the cathode spacer poles 224 and the vortices do not interfere with each other.

The plurality of cathode spacer poles 224 may be disposed in a cross shape to favorably act on the formation of the vortex of the seawater while durability of the device is improved. As described above, the shape and the number of the cathode spacer poles 224 may be adopted in various ways in view of the vortex generation.

FIG. 21 illustrates the cathode spacer pole in another example according to the second embodiment of the present disclosure. The plurality of cathode spacer poles 224 according to the second embodiment may be individually disposed or grouped in the support body 226 which is movable leftward and right ward inside the subplate 230.

When a pair of control pins 225 located inside the subplate 230 moves upward and downward, an upward-downward movement force is converted into a horizontal movement force by a conversion mechanism so that the slidable support body 226 located inside the subplate 230 may be horizontally moved. Accordingly, the cathode spacer pole 224 coupled with the support body 226 may be moved together.

In FIG. 21, an end portion of the pair of control pins 225 moving upward and downward may have a form inclined in opposite directions, and a cross section of the slidable support body 226 may have a rhombus shape. An inclined surface of the end portion of the control pin 225 may meet the inclined surface of the rhombus shape to move the support body 226 in both directions. In FIG. 21, when the left control pin 225 ascends and the right control pin 225 descends, the slidable support body 226 may move to a left side, and when the left control pin 225 descends and the right control pin 225 ascends, the slidable support body 226 may move in the opposite direction. The structure presented in FIG. 21 is an example of one structure for moving the cathode spacer pole 224, and the cathode spacer pole 224 may be moved by using other forms of cam mechanisms, link mechanisms, or the like.

According to the above-described structure, the inorganic precipitates formed in the cathode spacer pole 224 may be removed from its surface through the physical movement of the cathode spacer pole 224.

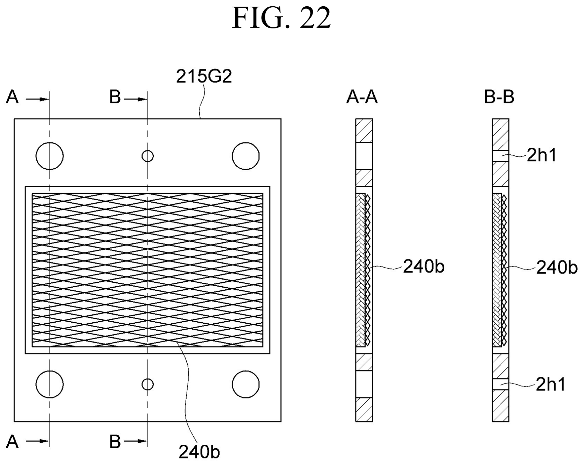

FIG. 22 is a view illustrating the anode electrocatalytic layer, the anode spacer, and the anode gasket of the direct seawater electrolysis device according to the second embodiment of the present disclosure.

The direct seawater electrolysis device 200 may include a cathode gasket 215G1 for fixing the cathode electrocatalytic layer 215a, an anode current collector 220b located on a side surface of the anode electrocatalytic layer 215b located far from the bipolar membrane 210, an anode spacer 240b located between the anode electrocatalytic layer 215b and the anode current collector 220b, and an anode gasket 215G2 for fixing the anode electrocatalytic layer 215b and the anode spacer 240b. The anode spacer 240b may have a mesh form including titanium. Here, as the anode spacer 240b, the conductive material may be used since an inorganic precipitation does not occur.

In addition, the anode spacer 240b interposed between the anode electrocatalytic layer 215b and the anode current collector 220b may fulfill a function of providing a flow path through which the electrolyte may flow by maintaining a gap between the anode electrocatalytic layer 215b and the anode current collector 220b.

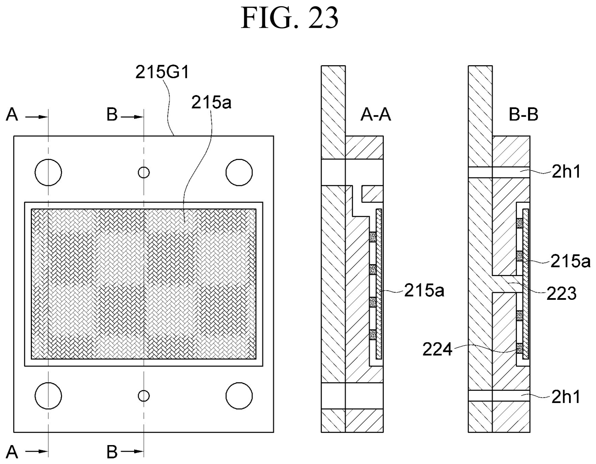

FIG. 23 is a view illustrating the cathode electrocatalytic layer, the cathode spacer pole, and the cathode gasket of the direct seawater electrolysis device according to the second embodiment of the present disclosure.

Referring to FIG. 23, the cathode electrocatalytic layer 215a forming the direct seawater electrolysis device 200 may have a structure with which the cathode current collector coupler 223 is in direct contact, and the remaining portions may have a structure with which the cathode spacer poles 224 are in contact.

That is, the plurality of cathode spacer poles 224 formed on one side surface of the subplate 230 form a space through which the seawater may flow between the subplate 230 and the cathode electrocatalytic layer 215a, and a continuous water reduction reaction may occur on the cathode electrocatalytic layer 215a by the seawater flowing in this space. The plurality of cathode spacer poles 224 are arrayed at regular intervals to uniformly maintain the space between the subplate 230 and the cathode electrocatalytic layer 215a.

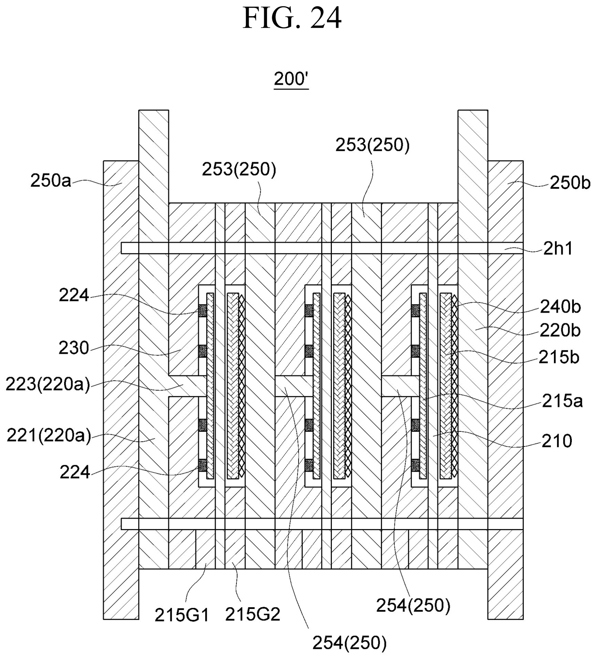

FIG. 24 is a view illustrating a multi-cell of the direct seawater electrolysis device according to the second embodiment of the present disclosure.

Referring to FIG. 24, according to another aspect of the second embodiment of the present disclosure, the multi-cell of the direct seawater electrolysis device may include a direct seawater electrolysis device 200' in some examples and one or more bipolar plates 250 on the direct seawater electrolysis device 200'.

One or more bipolar plates 250 according to the second embodiment of the present disclosure may be provided to couple or isolate mutually different membrane-electrode assemblies. Specifically, each of the bipolar plates 250 may include a bipolar plate body 253 separated from the cathode electrocatalytic layer 215a, and a bipolar plate coupler 254 in contact with a portion of the cathode electrocatalytic layer 215a. The bipolar plate body 253 and the bipolar plate coupler 254 may include the conductive material.

The subplate 230 formed of the non-conductive material may be brought into contact with the bipolar plate body 253 of the bipolar plate 250 to prevent direct contact with the seawater. Accordingly, the inorganic precipitates may be effectively prevented from being formed, thereby effectively preventing an excessive increase in the resistance of the cell. Accordingly, the voltage may be stably maintained during a long-term operation of the cell.

Here, the other portion of the cathode electrocatalytic layer 215a may be in contact with the cathode spacer pole 224.

Therefore, the direct seawater electrolysis device 200' may lower internal resistance of the cell, and the cell voltage may be stably maintained during a long-term operation.

In addition, the inorganic precipitates may be effectively prevented from being formed in components other than the electrode, and a system which may recover the magnesium hydroxide having various application fields may be realized.

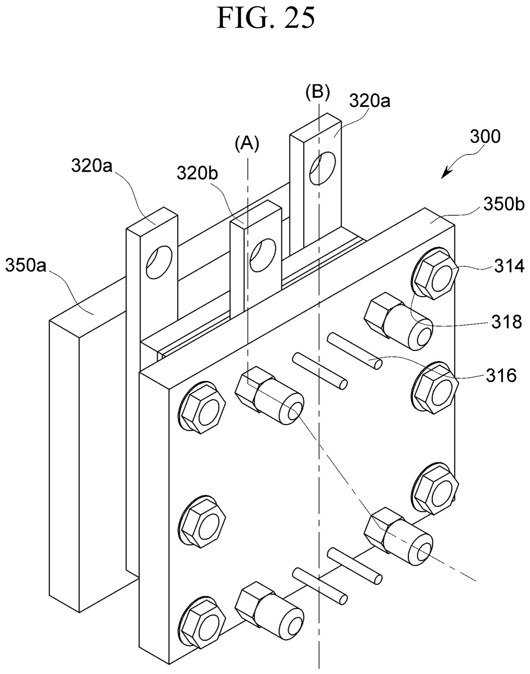

Hereinafter, referring to FIGS. 25 to 36, the direct seawater electrolysis device including a plurality of cathodes according to a third embodiment of the present disclosure will be described in detail.

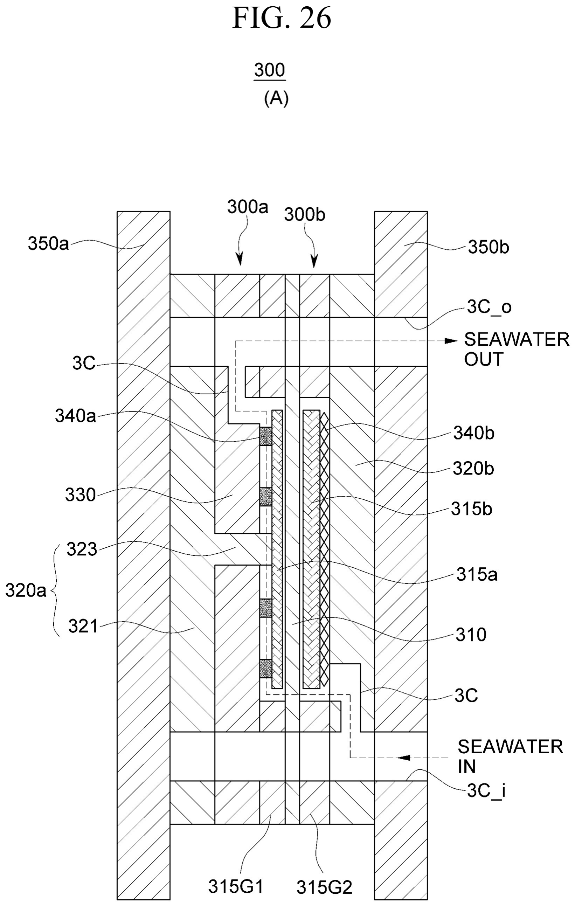

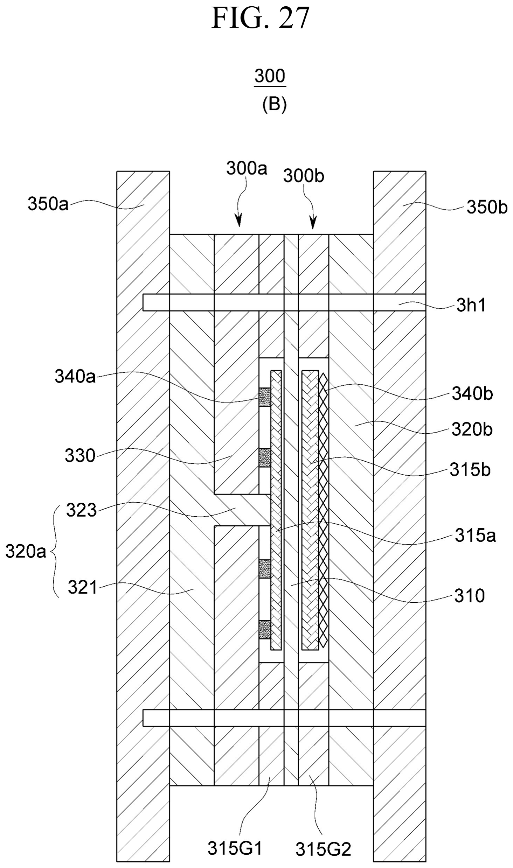

FIG. 25 is a view illustrating the direct seawater electrolysis device including the plurality of cathodes according to the third embodiment of the present disclosure. FIG. 26 is a cross-sectional view taken along line A in the direct seawater electrolysis device including the plurality of cathodes according to the third embodiment of the present disclosure in FIG. 25. FIG. 27 is a cross-sectional view taken along line B in the direct seawater electrolysis device including the plurality of cathodes according to the third embodiment of the present disclosure in FIG. 25.

Referring to FIGS. 25 to 27, a direct seawater electrolysis device 300 including a plurality of cathodes according to the third embodiment of the present disclosure may include a cathode 300a immersed in the seawater, and an anode 300b immersed in the anolyte.

The direct seawater electrolysis device 300 may generate hydrogen through the cathode 300a, but the hydroxide ions generated together may react with various metal cations (for example, the magnesium) contained in the seawater to form the inorganic precipitates (for example, the magnesium hydroxide), and the inorganic precipitates may increase the interfacial resistance of the cathode 300a and block the seawater flow path, thereby reducing the voltage efficiency of the stack.

The direct seawater electrolysis device 300 including the plurality of cathodes according to the third embodiment of the present disclosure may include a bipolar membrane 310 disposed between the cathode 300a and the anode 300b to acidify the seawater.

Therefore, since the bipolar membrane 310 which discharges protons without a dissolution process of the inorganic precipitates generated on the cathode 300a through a separate acid solution is used as a diaphragm, the protons discharged from the bipolar membrane 310 acidify the seawater, thereby preventing the inorganic precipitates from being generated.

Through this configuration, the direct seawater electrolysis device 300 may be continuously operated without stopping the operation of the direct seawater electrolysis device 300 to dissolve the inorganic precipitates generated on the cathode 300a through the separate acid solution.

The direct seawater electrolysis device 300 including the plurality of cathodes according to the third embodiment of the present disclosure may include a cathode end plate 350a forming an outer appearance of the direct seawater electrolysis device 300 and protecting the cathode 300a, and an anode end plate 350b protecting the anode 300b.

The cathode end plate 350a and the anode end plate 350b may include a fastening hole 318 to which a fastening member 314 configured to fasten the components of the direct seawater electrolysis device 300 is fastened. The number of the fastening members 314 and the fastening holes 318 may be determined in various ways, depending on a scale of the direct seawater electrolysis device 300.

The cathode end plate 350a and the anode end plate 350b may include a guide hole 3h1 through which a guide pin 316 configured to align the components of the direct seawater electrolysis device 300 penetrates.

Four guide pins 316 and four guide holes 3h1 are illustrated so that two of each are formed to face each other on upper and lower sides of the direct seawater electrolysis device 300, but the configuration is not limited thereto.

The cathode 300a according to the third embodiment of the present disclosure may include a first cathode 300a1, and a second cathode 300a2 disposed to be electrically isolated from the first cathode 300a1. The first cathode 300a1 and the second cathode 300a2 may be symmetrically disposed. That is, the first cathode 300a1 and the second cathode 300a2 may be electrically and physically isolated from each other.

The first cathode 300a1 and the second cathode 300a2 may be alternately operated. The second cathode 300a2 may be stopped to dissolve the inorganic precipitates generated in the second cathode 300a2 while the first cathode 300a1 is operated to generate the hydrogen from the seawater.

Since the protons discharged from the bipolar membrane 310 acidify the seawater, the growth of the inorganic precipitates may be suppressed without stopping the operation of the direct seawater electrolysis device 300. At a low current density (approximately 20 mA/cm² or lower), the inorganic precipitates formed at the interface of the cathode electrocatalytic layer 315a included in the cathode 300a may be relatively quickly dissolved. However, at a relatively high current density (approximately 100 mA/cm² or higher), a generation speed of the inorganic precipitates may be faster than a dissolution speed.

Accordingly, when the direct seawater electrolysis device 300 is continuously operated without stopping the operation, the inorganic precipitates may gradually grow. Consequently, a thick film of the inorganic precipitates (approximately the thickness of 1 mm or larger) may be eventually formed. Therefore, the interfacial resistance of the cathode electrocatalytic layer 315a may increase, and voltage efficiency may decrease.

The direct seawater electrolysis device 300 including the plurality of cathodes according to the third embodiment of the present disclosure is configured such that the first cathode 300a1 and the second cathode 300a2 which are electrically and physically isolated from each other are alternately operated. In this manner, the second cathode 300a2 may be stopped to dissolve the inorganic precipitates generated on the second cathode 300a2 while the first cathode 300a1 is operated to generate the hydrogen through the seawater.

Accordingly, even when the direct seawater electrolysis device 300 is continuously operated without stopping the operation of the direct seawater electrolysis device 300 under the relatively high current density, the electrochemical activity of the cathode 300a may be maintained by controlling the thickness of the inorganic precipitates generated on the first cathode 300a1 and the second cathode 300a2 to a prescribed thickness or smaller.

The direct seawater electrolysis device 300 may be controlled through a switch (not illustrated) to alternately operate the first cathode 300a1 and the second cathode 300a2. A switching time of the first cathode 300a1 and the second cathode 300a2 may be set depending on a growth rate of the inorganic precipitates generated on the first cathode 300a1 and the second cathode 300a2.

The seawater passing through the cathode 300a may be periodically replaced with new seawater, and the seawater may be added as much as the amount of the seawater reduced through a hydrogen generation process.

That is, the direct seawater electrolysis device 300 including the plurality of cathodes according to the third embodiment of the present disclosure may include the first cathode 300a1 and the second cathode 300a2 which are alternately operated. In this manner, a voltage increase in the first cathode 300a1 and the second cathode 300a2 may be reduced, compared to when a general single cathode is used during the hydrogen generation.

Specifically, when the hydrogen is generated through the direct seawater electrolysis device 300 for approximately 48 hours, a general single cathode shows a voltage increase of approximately 15% or higher, but the first cathode 300a1 and the second cathode 300a2 according to the third embodiment of the present disclosure may show a voltage increase of approximately 5%. Accordingly, the voltage of the cathode 300a including the first cathode 300a1 and the second cathode 300a2 may be reduced, and activity of the cathode electrocatalytic layer 315a may be maintained.

The direct seawater electrolysis device 300 including the plurality of cathodes according to the third embodiment of the present disclosure may include the guide pin 316 and the guide hole 3h1 which are configured to guide the first cathode 300a1 and the second cathode 300a2 which are electrically and physically isolated. The guide pin 316 and the guide hole 3h1 may form four guide pins 316 and four guide holes by providing one each at the upper and lower portions to respectively guide the first cathode 300a1 and the second cathode 300a2 at the upper and lower portions. In this manner, four guide pins 316 and four guide holes 3h1 may be formed. However, the configuration is not limited thereto.

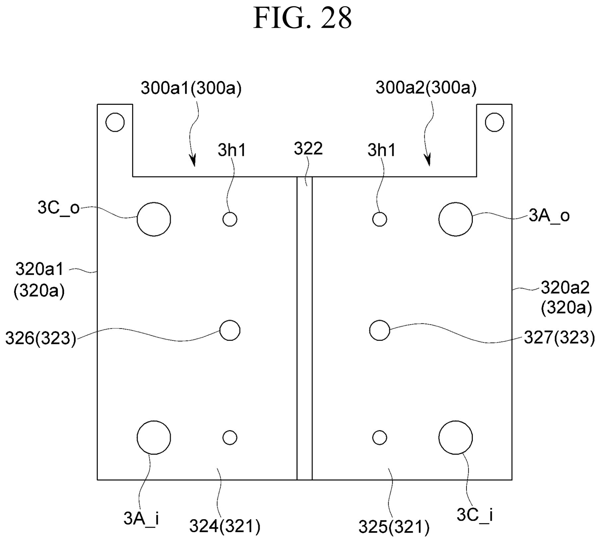

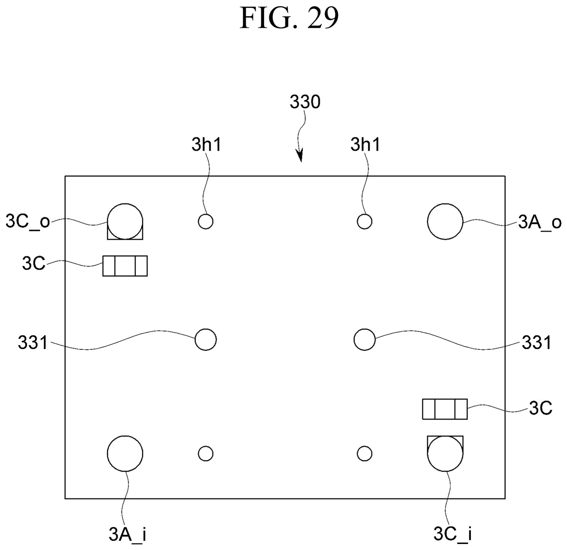

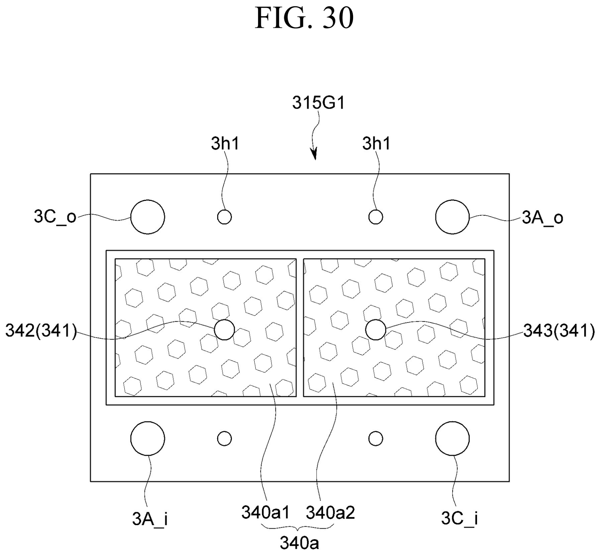

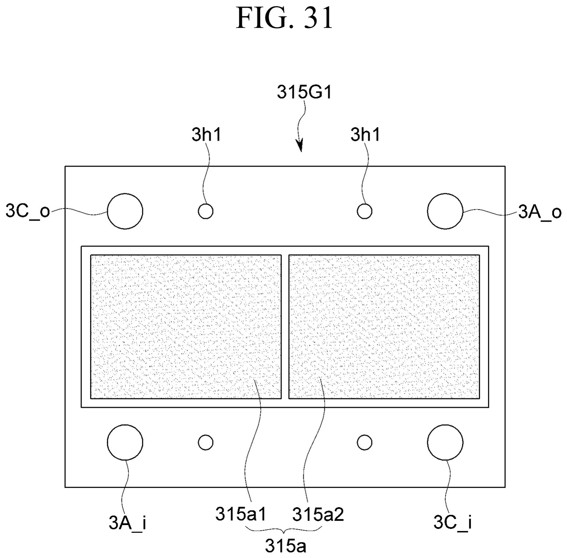

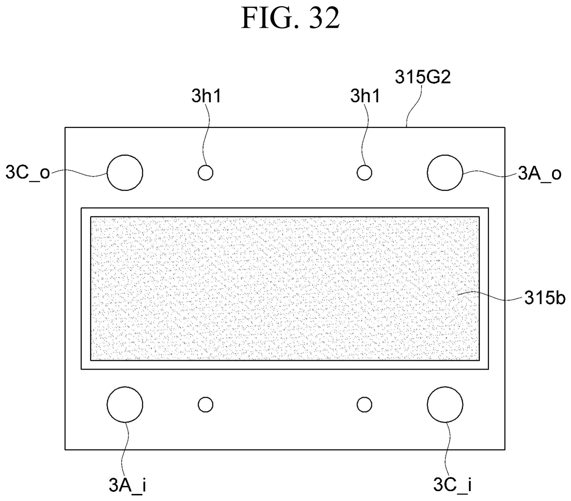

FIG. 28 is a view illustrating the cathode current collector in the direct seawater electrolysis device including the plurality of cathodes according to the third embodiment of the present disclosure. FIG. 29 is a view illustrating the subplate in the direct seawater electrolysis device including the plurality of cathodes according to the third embodiment of the present disclosure. FIG. 30 is a view illustrating the cathode gasket and the cathode spacer in the direct seawater electrolysis device including the plurality of cathodes according to the third embodiment of the present disclosure. FIG. 31 is a view illustrating the cathode gasket and the cathode electrocatalytic layer in the direct seawater electrolysis device including the plurality of cathodes according to the third embodiment of the present disclosure. FIG. 32 is a view illustrating the anode gasket and the anode electrocatalytic layer in the direct seawater electrolysis device including the plurality of cathodes according to the third embodiment of the present disclosure.

Referring to FIGS. 28 to 32, the cathode 300a according to the third embodiment of the present disclosure may include a cathode current collector 320a, and a cathode electrocatalytic layer 315a electrically coupled with the cathode current collector 320a.

The cathode 300a may include a subplate 330 disposed between the cathode current collector 320a and the cathode electrocatalytic layer 315a, and a cathode spacer 340a disposed between the cathode electrocatalytic layer 315a and the subplate 330.

One surface of the cathode current collector 320a may be in contact with the cathode end plate 350a, and the other surface of the cathode current collector 320a may be in contact with the subplate 330.

The cathode current collector 320a may include a first cathode current collector 320a1, and a second cathode current collector 320a2 disposed separately from the first cathode current collector 320a1. The cathode current collector 320a may include a cathode current collector gasket 322 disposed between the first cathode current collector 320a1 and the second cathode current collector 320a2 to electrically isolate the first cathode current collector 320a1 and the second cathode current collector 320a2.

The cathode current collector gasket 322 may include the non-conductive material. The cathode current collector gasket 322 may include a silicone material. However, the configuration is not limited thereto, and cathode current collector gasket 322 may include various non-conductive materials as long as the cathode current collector gasket 322 is configured to electrically isolate the first cathode current collector 320a1 and the second cathode current collector 320a2 from each other.

The first cathode current collector 320a1 and the second cathode current collector 320a2 may be symmetrically disposed across the cathode current collector gasket 322.

The cathode current collector 320a may include a cathode current collector body 321 in contact with the subplate 330, and a cathode current collector coupler 323 protruding from the cathode current collector body 321 to penetrate the subplate 330 and to be electrically coupled with the cathode electrocatalytic layer 315a.

The cathode current collector body 321 may include a first cathode current collector body 324 forming the first cathode current collector 320a1, and a second cathode current collector body 325 forming the second cathode current collector 320a2.

The cathode current collector coupler 323 may penetrate the subplate 330 and the cathode spacer 340a. The cathode current collector coupler 323 may include a cylindrical shape, but the configuration is not limited thereto.

The cathode current collector coupler 323 may include a first cathode current collector coupler 326 provided in the first cathode current collector 320a1, and a second cathode current collector coupler 327 provided in the second cathode current collector 320a2. The first cathode current collector coupler 326 and the second cathode current collector coupler 327 may be disposed symmetrically to each other. However, the configuration is not limited thereto.

The cathode current collector 320a may include a seawater inlet 3C_i and a seawater outlet 3C_o through which the seawater for immersing the cathode 300a may flow.

The seawater inlet 3C_i may be provided in the second cathode current collector body 325, and the seawater outlet 3C_o may be provided in the first cathode current collector body 324.

The cathode current collector 320a may include an anolyte inlet 3A_i and an anolyte outlet 3A_o through which the anolyte as the electrolyte for immersing the anode 300b may flow.

The anolyte inlet 3A_i may be provided in the first cathode current collector body 324, and the anolyte outlet 3A_o may be provided in the second cathode current collector body 325. The direct seawater electrolysis device 300 including the plurality of cathodes according to the third embodiment of the present disclosure may include a guide pin 316 and a guide hole 3h1 which are configured to guide the first cathode current collector 320a1 and the second cathode current collector 320a2 which are electrically and physically isolated.

The cathode current collector coupler 323 may be disposed between the guide holes 3h1 provided at the upper and lower portions of the cathode current collector body 321. However, the configuration is not limited thereto.

The subplate 330 according to the third embodiment of the present disclosure may be formed of the non-conductive material to prevent inorganic precipitates from being generated in the cathode current collector 320a.

The subplate 330 may include at least one of a silicone resin, diene rubber, and a glass fiber as the non-conductive material, specifically, may include at least one of a plastic resin and a silicone resin, and more specifically, may include at least one of polyurethane, polyvinyl chloride, polyolefin, polyphenylene oxide, polybutylene terephthalate, polyethylene terephthalate, a phenol resin, a fluorine-based resin, an epoxy resin, a polyimide resin, an acrylic resin, polyphenylene sulfide, polyamide, and polycarbonate.

One surface of the subplate 330 may be in contact with the cathode current collector 320a, and the other surface of the subplate 330 may be in contact with the cathode spacer 340a.

The subplate 330 may be disposed between the cathode current collector 320a and the cathode electrocatalytic layer 315a to electrically couple the cathode electrocatalytic layer 315a and the cathode current collector coupler 323, and may prevent electrical coupling between the cathode electrocatalytic layer 315a and the cathode current collector body 321.

Accordingly, the inorganic precipitates may be prevented from being generated due to the water reduction reaction in the seawater on the cathode current collector body 321. As a result, an area of the cathode current collector 320a where the inorganic precipitates are generated may be reduced.

The subplate 330 may include the seawater inlet 3C_i and the seawater outlet 3C_o through which the seawater for immersing the cathode 300a may flow.

The subplate 330 may include a seawater flow path 3C through which the seawater flowing in through the seawater inlet 3C_i and flowing out through the seawater outlet 3C_o flows.

The subplate 330 may include the anolyte inlet 3A_i and the anolyte outlet 3A_o through which the anolyte as the electrolyte for immersing the anode 300b may flow.

The subplate 330 may include the guide hole 3h1 through which the guide pin 316 for aligning the components of the direct seawater electrolysis device 300 penetrates.

The subplate 330 may include a plate hole 331 through which the cathode current collector coupler 323 penetrates. The plate hole 331 may include two plate holes 331 symmetrically provided to correspond to the first cathode current collector coupler 326 and the second cathode current collector coupler 327.

The plate hole 331 may be disposed between the guide holes 3h1 provided at the upper and lower portions of the subplate 330. However, the configuration is not limited thereto.

The cathode spacer 340a according to the third embodiment of the present disclosure may be formed of the non-conductive material to prevent the inorganic precipitates from being generated in the cathode 300a. The cathode spacer 340a may include a plastic material. However, the configuration is not limited thereto.

One surface of the cathode spacer 340a may be in contact with the subplate 330, and the other surface of the cathode spacer 340a may be in contact with the cathode electrocatalytic layer 315a. The cathode spacer 340a may maintain a constant space between the subplate 330 and the cathode electrocatalytic layer 315a.

The cathode spacer 340a may form a flow path through which the seawater flowing into the cathode 300a passes. Accordingly, the cathode spacer 340a according to the third embodiment of the present disclosure is formed of the non-conductive material, thereby preventing the water reduction reaction and the generation of the inorganic precipitates by the seawater passing through the flow path.

The cathode spacer 340a may have various forms as long as a flow path through which the seawater flowing through the cathode 300a passes may be formed. For example, the cathode spacer 340a may have a form including a mesh or multiple holes having the diameter of several millimeters.

The cathode spacer 340a may include the first cathode spacer 340a1 in contact with the first cathode current collector 320a1, and the second cathode spacer 340a2 separated from the first cathode spacer 340a1 and in contact with the second cathode current collector 320a2. The first cathode spacer 340a1 and the second cathode spacer 340a2 may be disposed symmetrically to each other.

The cathode spacer 340a may be formed of the conductive material. The direct seawater electrolysis device 300 including the plurality of cathodes according to the third embodiment of the present disclosure is configured to alternately operate the first cathode spacer 340a1 and the second cathode spacer 340a2 which are electrically and physically isolated from each other. In this manner, the second cathode spacer 340a2 may be stopped to dissolve the inorganic precipitates generated in the second cathode spacer 340a2 while the first cathode spacer 340a1 is operated.

The cathode spacer 340a may include a cathode spacer hole 341 through which the cathode current collector coupler 323 penetrates.

The cathode spacer hole 341 may include a first cathode spacer hole 342 provided in the first cathode spacer 340a1 to be penetrated by the first cathode current collector coupler 326, and a second cathode spacer hole 343 provided in the second cathode spacer 340a2 to be penetrated by the second cathode current collector coupler 327.

The direct seawater electrolysis device 300 including the plurality of cathodes according to the third embodiment of the present disclosure has been described as that in which the cathode spacer 340a is formed as a separate configuration from the subplate 330. However, the configuration is not limited thereto. As in the second embodiment of the present disclosure, a function of the cathode spacer 340a may be fulfilled through a plurality of protrusion structures protruding from the subplate 330.

In this case, the subplate 330 and the cathode spacer 340a may be a single structure, and a flow path of the seawater flowing through the cathode 300a may be formed by the cathode spacer 340a having a plurality of structures protruding from the subplate 330.

The cathode electrocatalytic layer 315a according to the third embodiment of the present disclosure may include a first cathode electrocatalytic layer 315a1 in contact with the first cathode spacer 340a1, and a second cathode electrocatalytic layer 315a2 separated from the first cathode electrocatalytic layer 315a1 and in contact with the second cathode spacer 340a2.

The cathode electrocatalytic layer 315a may be disposed between the bipolar membrane 310 and the cathode spacer 340a. One surface of the cathode electrocatalytic layer 315a may be in contact with the bipolar membrane 310, and the other surface of the cathode electrocatalytic layer 315a may be in contact with the cathode spacer 340a.

The first cathode electrocatalytic layer 315a1 and the second cathode electrocatalytic layer 315a2 may be electrically and physically isolated from each other. The first cathode electrocatalytic layer 315a1 and the second cathode electrocatalytic layer 315a2 may be separately disposed symmetrically from each other.

The first cathode electrocatalytic layer 315a1 may be electrically coupled with the first cathode current collector coupler 326, and the second cathode electrocatalytic layer 315a2 may be electrically coupled with the second cathode current collector coupler 327.

The first cathode electrocatalytic layer 315a1 and the second cathode electrocatalytic layer 315a2 may share the seawater flowing through the flow path formed by the cathode spacer 340a.

The direct seawater electrolysis device 300 including the plurality of cathodes according to the third embodiment of the present disclosure may include a cathode gasket 315G1 configured to fix the cathode electrocatalytic layer 315a and the cathode spacer 340a.

The cathode gasket 315G1 may be formed of the non-conductive material to prevent the inorganic precipitates from being generated in the cathode 300a. The cathode gasket 315G1 may include a plastic material or a silicone material. However, the configuration is not limited thereto.

The cathode gasket 315G1 may be disposed between the subplate 330 and the bipolar membrane 310. One surface of the cathode gasket 315G1 may be in contact with the subplate 330, and the other surface of the cathode gasket 315G1 may be in contact with the bipolar membrane 310.

The thickness of the cathode gasket 315G1 may be formed in various ways within a limit of accommodating the cathode electrocatalytic layer 315a and the cathode spacer 340a.

The cathode gasket 315G1 may include the seawater inlet 3C_i and the seawater outlet 3C_o through which the seawater for immersing the cathode 300a may flow.

The cathode gasket 315G1 may include the anolyte inlet 3A_i and the anolyte outlet 3A_o through which the anolyte as the electrolyte for immersing the anode 300b may flow.

The cathode gasket 315G1 may include the guide hole 3h1 through which the guide pin 316 for aligning the components of the direct seawater electrolysis device 300 penetrates.

The direct seawater electrolysis device 300 including the plurality of cathodes according to the third embodiment of the present disclosure may include the bipolar membrane 310 disposed between the cathode 300a and the anode 300b to acidify the seawater.

The bipolar membrane 310 may be disposed between the cathode gasket 315G1 and the anode gasket 315G2. One surface (cation exchange layer) of the bipolar membrane 310 may be in contact with the cathode gasket 315G1, and the other surface (anion exchange layer) of the bipolar membrane 310 may be in contact with the anode gasket 315G2.

The bipolar membrane 310 may be disposed between the cathode electrocatalytic layer 315a and the anode electrocatalytic layer 315b. One surface (cation exchange layer) of the bipolar membrane 310 may be in contact with the cathode electrocatalytic layer 315a, and the other surface (anion exchange layer) of the bipolar membrane 310 may be in contact with the anode electrocatalytic layer 315b.

The bipolar membrane 310 may include the seawater inlet 3C_i and the seawater outlet 3C_o through which the seawater for immersing the cathode 300a may flow.

The bipolar membrane 310 may include the anolyte inlet 3A_i and the anolyte outlet 3A_o through which the anolyte as the electrolyte for immersing the anode 300b may flow.

The bipolar membrane 310 may include the guide hole 3h1 through which the guide pin 316 for aligning the components of the direct seawater electrolysis device 300 penetrates.

Accordingly, the cathode 300a according to the third embodiment of the present disclosure may include the cathode end plate 350a, the cathode current collector 320a, the cathode electrocatalytic layer 315a, the subplate 330, the cathode spacer 340a, and the cathode gasket 315G1.

The first cathode 300a1 may include the cathode end plate 350a, the first cathode current collector 320a1, the first cathode electrocatalytic layer 315a1, the subplate 330, the first cathode spacer 340a1, and the cathode gasket 315G1.

The second cathode 300a2 may include the cathode end plate 350a, the second cathode current collector 320a2, the second cathode electrocatalytic layer 315a2, the subplate 330, the second cathode spacer 340a2, and the cathode gasket 315G1.

The direct seawater electrolysis device 300 including the plurality of cathodes according to the third embodiment of the present disclosure may include the cathode 300a immersed in the seawater, and the anode 300b immersed in the anolyte.

The anode 300b may include the anode current collector 320b, and the anode electrocatalytic layer 315b electrically coupled with the anode current collector 320b.

The anode 300b may include the anode spacer 340b disposed between the anode electrocatalytic layer 315b and the anode current collector 320b, and the anode gasket 315G2 disposed together with the cathode gasket 315G1 across the bipolar membrane 310.

Unlike the cathode current collector 320a, the anode current collector 320b may be integrally formed as a single configuration. The anode current collector 320b may include the conductive material.

The anode current collector 320b may be disposed between the anode spacer 340b and the anode end plate 350b. One surface of the anode current collector 320b may be in contact with the anode spacer 340b, and the other surface of the anode current collector 320b may be in contact with the anode end plate 350b.

The anode current collector 320b may include the seawater inlet 3C_i and the seawater outlet 3C_o through which the seawater for immersing the cathode 300a may flow.

The anode current collector 320b may include the anolyte inlet 3A_i and the anolyte outlet 3A_o through which the anolyte as the electrolyte for immersing the anode 300b may flow.

The anode current collector 320b may include the anolyte flow path 3A through which the anolyte as the electrolyte flowing in through the anolyte inlet 3A_i and flowing out through the anolyte outlet 3A_o flows.

The anode current collector 320b may include the guide hole 3h1 through which the guide pin 316 for aligning the components of the direct seawater electrolysis device 300 penetrates.

The anode electrocatalytic layer 315b may be integrally formed as a single configuration, unlike the cathode electrocatalytic layer 315a. Areas of the anode electrocatalytic layer 315b and the cathode electrocatalytic layer 315a may be configured to be the same. The area of the anode electrocatalytic layer 315b may be the same as a total area obtained by adding the area of the first cathode electrocatalytic layer 315a1 and the area of the second cathode electrocatalytic layer 315a2. More specifically, the total area of the anode electrocatalytic layer 315b may be the same as the sum of the area of the first cathode electrocatalytic layer 315a1, the area of the second cathode electrocatalytic layer 315a2, and the area of the separated space between the first cathode electrocatalytic layer 315a1 and the second cathode electrocatalytic layer 315a2. However, the configuration is not limited thereto.

The anode electrocatalytic layer 315b may be disposed between the bipolar membrane 310 and the anode spacer 340b. One surface of the anode electrocatalytic layer 315b may be in contact with the bipolar membrane 310, and the other surface of the anode electrocatalytic layer 315b may be in contact with the anode spacer 340b.

Unlike the cathode spacer 340a, the anode spacer 340b may be integrally formed as a single configuration. The anode spacer 340b may be formed of the conductive material. As the anode spacer 340b, the conductive material may be used since the water reduction reaction does not occur.

The anode spacer 340b may be disposed between the anode electrocatalytic layer 315b and the anode current collector 320b. One surface of the anode spacer 340b may be in contact with the anode electrocatalytic layer 315b, and the other surface of the anode spacer 340b may be in contact with the anode current collector 320b.

The anode spacer 340b may maintain a constant space between the anode current collector 320b and the anode electrocatalytic layer 315b. The anode spacer 340b may form a flow path through which the electrolyte may flow.

The anode spacer 340b may be configured in a form including a mesh or multiple holes having the diameter of several millimeters. The anode spacer 340b may include titanium (Ti). However, the configuration is not limited thereto.

The anode gasket 315G2 may fix the anode electrocatalytic layer 315b and the anode spacer 340b.

The anode gasket 315G2 may be formed of the non-conductive material. The anode gasket 315G2 may include a plastic material or a silicone material. However, the configuration is not limited thereto.

The anode gasket 315G2 may be disposed between the anode current collector 320b and the bipolar membrane 310. One surface of the anode gasket 315G2 may be in contact with the anode current collector 320b, and the other surface of the anode gasket 315G2 may be in contact with the bipolar membrane 310.

The thickness of the anode gasket 315G2 may be formed in various ways within a limit of accommodating the anode electrocatalytic layer 315b and the anode spacer 340b.

The anode gasket 315G2 may include the seawater inlet 3C_i and the seawater outlet 3C_o through which the seawater for immersing the cathode 300a may flow.

The anode gasket 315G2 may include the anolyte inlet 3A_i and the anolyte outlet 3A_o through which the anolyte as the electrolyte for immersing the anode 300b may flow.

The anode gasket 315G2 may include the guide hole 3h1 through which the guide pin 316 for aligning the components of the direct seawater electrolysis device 300 penetrates.

The anode end plate 350b may include the seawater inlet 3C_i and the seawater outlet 3C_o through which the seawater for immersing the cathode 300a may flow.

The anode end plate 350b may include the anolyte inlet 3A_i and the anolyte outlet 3A_o through which the anolyte as the electrolyte for immersing the anode 300b may flow.

Accordingly, the anode 300b according to the third embodiment of the present disclosure may include the anode end plate 350b, the anode current collector 320b, the anode electrocatalytic layer 315b, the anode spacer 340b, and the anode gasket 315G2.

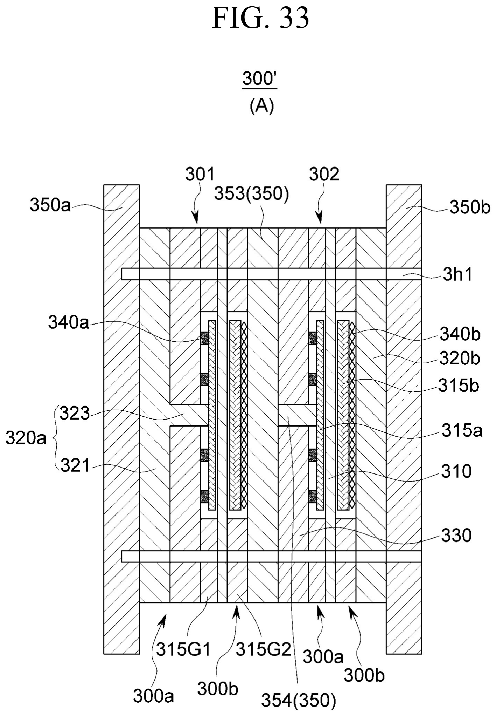

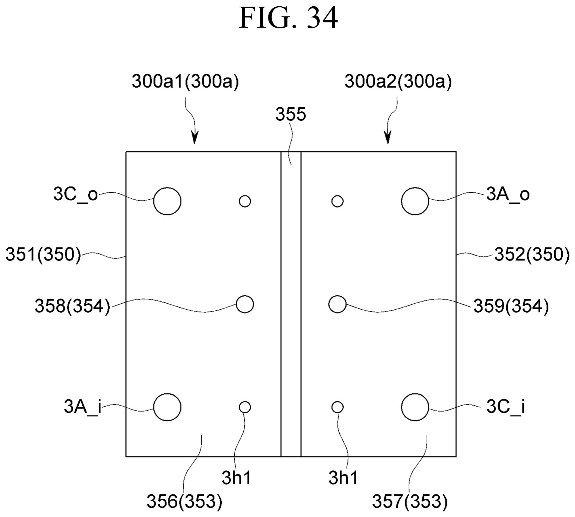

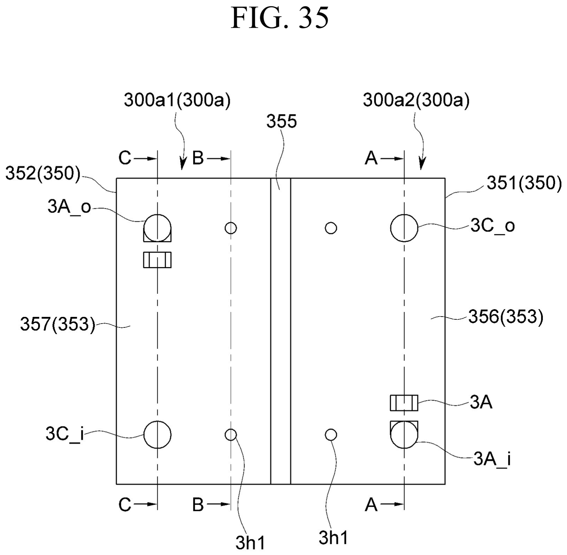

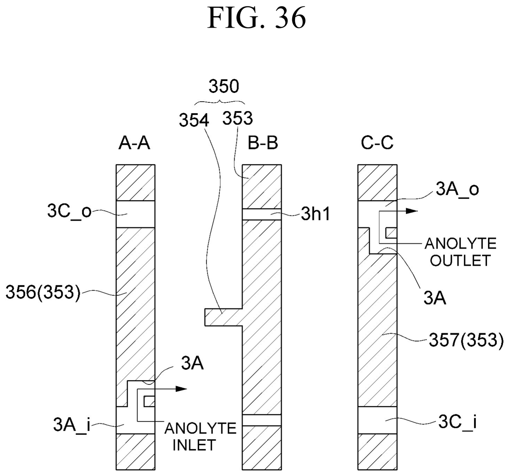

FIG. 33 is a cross-sectional view in which the direct seawater electrolysis multi-cell including plurality of the cathodes according to the third embodiment of the present disclosure is taken along line B of the direct seawater electrolysis device including the plurality of cathodes according to the third embodiment of the present disclosure in FIG. 25, in another example according to the third embodiment of the present disclosure. FIG. 34 is a view illustrating one surface of the bipolar plate in contact with the subplate in the direct seawater electrolysis device including the plurality of cathodes in another example according to the third embodiment of the present disclosure. FIG. 35 is a view illustrating the other surface of the bipolar plate in contact with the anode spacer in the direct seawater electrolysis device including the plurality of cathodes in another example according to the third embodiment of the present disclosure. FIG. 36 is a cross-sectional view taken along lines A, B, and C of the direct seawater electrolysis device including the plurality of cathodes in another example according to the third embodiment of the present disclosure in FIG. 35.

Referring to FIGS. 33 to 36, in another example according to the third embodiment of the present disclosure, a direct seawater electrolysis device 300' including the plurality of cathodes may include a first cell 301 including the cathode 300a and the anode 300b to form the multi-cell, and a second cell 302 including the cathode 300a and the anode 300b to be electrically coupled with the first cell 301.

The direct seawater electrolysis device 300' may include a bipolar plate 350 disposed between the first cell 301 and the second cell 302.

The bipolar plate 350 may be disposed between the anode spacer 340b of the first cell 301 and the subplate 330 of the second cell 302. One surface of the bipolar plate 350 may be in contact with the anode spacer 340b of the first cell 301, and the other surface of the bipolar plate 350 may be in contact with the subplate 330 of the second cell 302.

That is, in another example according to the third embodiment of the present disclosure, the bipolar plate 350 may simultaneously fulfill functions of the anode current collector 320b of the first cell 301 and the cathode current collector 320b of the second cell 302.

Meanwhile, FIG. 33 illustrates a case where two multi-cells are provided. However, as a matter of course, the number of the multi-cells may be increased to two or more, and a plurality of the bipolar plates 350 may be included depending on the number of the multi-cells.

The bipolar plate 350 may include a bipolar plate body 353 disposed between the anode 300b of the first cell 301 and the cathode 300a of the second cell 302, and a bipolar plate coupler 354 protruding from the bipolar plate body 353 to be electrically coupled with the cathode 300a of the second cell 302.

The bipolar plate coupler 354 may penetrate the subplate 330 and the cathode spacer 340a of the second cell 302, and may be electrically coupled with the cathode electrocatalytic layer 315a of the second cell 302.

The bipolar plate 350 may include a first bipolar plate 351, and a second bipolar plate 352 disposed separately from the first bipolar plate 351. The bipolar plate 350 may include a bipolar gasket 355 disposed between the first bipolar plate 351 and the second bipolar plate 352 to electrically isolate the first bipolar plate 351 and the second bipolar plate 352.

The bipolar gasket 355 may include the non-conductive material. The bipolar gasket 355 may include a silicone material. However, the configuration is not limited thereto, and the bipolar gasket 355 may include various non-conductive materials within a limit in which the first bipolar plate 351 and the second bipolar plate 352 are electrically isolated from each other.

The first bipolar plate 351 and the second bipolar plate 352 may be symmetrically disposed across the bipolar gasket 355.

The bipolar plate body 353 may include a first bipolar plate body 356 forming the first bipolar plate 351, and a second bipolar plate body 357 forming the second bipolar plate 352.

The bipolar plate coupler 354 may include a first bipolar plate coupler 358 provided in the first bipolar plate 351, and a second bipolar plate coupler 359 provided in the second bipolar plate 352. The first bipolar plate coupler 358 and the second bipolar plate coupler 359 may be disposed symmetrically to each other. However, the configuration is not limited thereto.

The bipolar plate 350 may include the seawater inlet 3C_i and the seawater outlet 3C_o through which the seawater for immersing the cathode 300a of the second cell 302 may flow.

The seawater inlet 3C_i may be provided in the second bipolar plate body 357, and the seawater outlet 3C_o may be provided in the first bipolar plate body 356.

The bipolar plate 350 may include the anolyte inlet 3A _i and the anolyte outlet 3A_o through which the anolyte as the electrolyte for immersing the anode 300b of the first cell 301 may flow.

The anolyte inlet 3A_i may be provided in the first bipolar plate body 356, and the anolyte outlet 3A_o may be provided in the second bipolar plate body 357.

The bipolar plate body 353 facing the anode 300b of the first cell 301 may include an anolyte flow path 3A through which the anolyte as the electrolyte flowing in through the anolyte inlet 3A_i and flowing out through an anolyte outlet 3A_o flows.

The anolyte flow path 3A may be formed on surfaces of the bipolar plate body 353. The bipolar plate body 353 may include the anolyte flow path 3A disposed to face the second cell 302.

The bipolar plate 350 may include the guide hole 3h1 through which the guide pin 316 for aligning the components of the direct seawater electrolysis device 300' penetrates.

The guide holes 3h1 provided in the bipolar plate 350 may form four guide holes 3h1 by providing one each in the upper and lower portions of the first bipolar plate body 356 and the second bipolar plate body 357 to respectively guide the first bipolar plate 351 and the second bipolar plate 352 in the upper and lower portions. However, the configuration is not limited thereto.

Meanwhile, although not illustrated in the drawings, the direct seawater electrolysis device 300' including the plurality of cathodes in another example according to the third embodiment of the present disclosure may not separately require the subplate 330 and the bipolar plate coupler 354 when the cathode spacer 340a is formed of the conductive material as in the anode spacer 340b.

That is, the bipolar plate body 353 and the cathode spacer 340a of the second cell 302 may be electrically and physically coupled by direct contact.

Hitherto, the present disclosure has been illustrated and described in relation to preferred embodiments for describing principles of the present disclosure as examples. Meanwhile, the present disclosure is not limited to the construction and the operation as illustrated and described. Those skilled in the art will readily understand that the present disclosure may be modified and corrected in various ways without departing from the concept and the scope of the appended claims.

## Claims

1. A direct seawater electrolysis device comprising:
a cathode electrocatalytic layer immersed in seawater;
an anode electrocatalytic layer immersed in anolyte;
a bipolar membrane interposed between the cathode electrocatalytic layer and the anode electrocatalytic layer;
a cathode current collector disposed on the cathode electrocatalytic layer;
a subplate on the cathode electrocatalytic layer; and
a cathode spacer interposed between the cathode electrocatalytic layer and the subplate,
wherein the cathode current collector includes a cathode current collector body separated from the cathode electrocatalytic layer, and a cathode current collector coupler in contact with a portion of the cathode electrocatalytic layer and interposed between the cathode current collector body and the portion of the cathode electrocatalytic layer, the subplate and the cathode spacer include one or more through-holes at positions corresponding to the cathode current collector coupler, and at least one of the subplate and the cathode spacer includes a non-conductive material.

2. A direct seawater electrolysis multi-cell comprising:
the direct seawater electrolysis device according to claim 1; and
one or more bipolar plates on the direct seawater electrolysis device,
wherein each of the bipolar plates includes a bipolar plate body separated from the cathode electrocatalytic layer, and a bipolar plate coupler in contact with a portion of the cathode electrocatalytic layer, and the bipolar plate coupler is interposed between the bipolar plate body and the portion of the cathode electrocatalytic layer.

3. A magnesium hydroxide recovery system comprising:
the direct seawater electrolysis multi-cell according to claim 2 and
an air bubble supply unit coupled with the direct seawater electrolysis multi-cell.

4. A direct seawater electrolysis device comprising:
a cathode electrocatalytic layer immersed in seawater;
an anode electrocatalytic layer immersed in anolyte;
a bipolar membrane interposed between the cathode electrocatalytic layer and the anode electrocatalytic layer;
a cathode current collector disposed on the cathode electrocatalytic layer; and
a subplate on the cathode electrocatalytic layer,
wherein the cathode current collector includes a cathode current collector body separated from the cathode electrocatalytic layer, and a cathode current collector coupler in contact with a portion of the cathode electrocatalytic layer and interposed between the cathode current collector body and the portion of the cathode electrocatalytic layer, the subplate is formed of a non-conductive material, includes one or more through-holes corresponding to the cathode current collector coupler, and includes a plurality of cathode spacer poles protruding from one side surface of the subplate to form a flow path of the seawater.

5. The direct seawater electrolysis device of claim 4, wherein the plurality of cathode spacer poles are arrayed at regular intervals to form a flow path of the seawater by uniformly maintaining a space between the cathode electrocatalytic layer and the subplate.

6. The direct seawater electrolysis device of claim 4, wherein the plurality of cathode spacer poles induce a vortex in the seawater to remove inorganicprecipitates generated on the cathode electrocatalytic layer or the cathode current collector coupler.

7. The direct seawater electrolysis device of claim 4, wherein the plurality of cathode spacer poles are individually disposed or grouped in a slidable support body inside the subplate.

8. A direct seawater electrolysis device including a plurality of cathodes comprising:
a cathode immersed in seawater;
an anode immersed in anolyte; and
a bipolar membrane disposed between the cathode and the anode to acidify the seawater,
wherein the cathode includes a first cathode and a second cathode separately disposed to be electrically isolated from the first cathode.

9. The direct seawater electrolysis device including the plurality of cathodes of claim 8, wherein the first cathode and the second cathode are alternately operated, and the second cathode is stopped to dissolve inorganic precipitates generated in the second cathode while the first cathode is operated to generate hydrogen in the seawater.

10. The direct seawater electrolysis device including the plurality of cathodes of claim 8, wherein the cathode includes a cathode current collector, a cathode electrocatalytic layer electrically coupled with the cathode current collector, a subplate formed of a non-conductive material to prevent inorganic precipitates from being generated in the cathode current collector and disposed between the cathode current collector and the cathode electrocatalytic layer, and a cathode spacer formed of a non-conductive material to prevent the inorganic precipitates from being generated in the cathode and disposed between the cathode electrocatalytic layer and the subplate.

11. The direct seawater electrolysis device including the plurality of cathodes of claim 10, wherein the cathode current collector includes a first cathode current collector, a second cathode current collector disposed to be separated from the first cathode current collector, and a cathode current collector gasket disposed between the first cathode current collector and the second cathode current collector to electrically isolate the first cathode current collector and the second cathode current collector.

12. The direct seawater electrolysis device including the plurality of cathodes of claim 11, wherein the cathode current collector includes a cathode current collector body in contact with the subplate, and a cathode current collector coupler penetrating the subplate and protruding from the cathode current collector body to be electrically coupled with the cathode electrocatalytic layer.

13. The direct seawater electrolysis device including the plurality of cathodes of claim 12, wherein the subplate includes a plate hole through which the cathode current collector coupler penetrates, the cathode spacer includes a cathode spacer hole through which the cathode current collector coupler penetrates, and the cathode spacer includes a first cathode spacer in contact with the first cathode current collector, and a second cathode spacer separated from the first cathode spacer and in contact with the second cathode current collector.

14. The direct seawater electrolysis device including the plurality of cathodes of claim 13, wherein the cathode electrocatalytic layer includes a first cathode electrocatalytic layer in contact with the first cathode spacer, and a second cathode electrocatalytic layer separated from the first cathode electrocatalytic layer and in contact with the second cathode spacer.

15. The direct seawater electrolysis device including the plurality of cathodes of claim 9, further comprising:
a bipolar plate for configuring a multi-cell,
wherein the bipolar plate includes a first bipolar plate, a second bipolar plate separated from the first bipolar plate, and a bipolar gasket disposed between the first bipolar plate and the second bipolar plate to electrically isolate the first bipolar plate and the second bipolar plate.
